# EUROPEAN PATENT APPLICATION

(11) **EP 1 867 705 A1**
(43) Date of publication of application: **19.12.2007**
(21) Application number: 06729994.1
(22) Date of filing: 20.03.2006
(51) Int. Cl.: C10M 171/00, C10M 105/18, C10M 105/32, C10M 107/34, F16D 41/06, C10N 20/00, C10N 30/00, C10N 30/06, C10N 30/08, C10N 40/04, C10N 50/10

(54) **GREASE COMPOSITION FOR ONE-WAY CLUTCH**

(30) Priority: 31.03.2005 JP 2005100940
(71) Applicant: Nippon Oil Corporation, Tokyo 105-8412 (JP)
(72) Inventor: SAKAMOTO, Kiyomi, NIPPON OIL CORPORATION, Yokohama-shi, Kanagawa, 231-0815 (JP); ARAI, Takashi, NIPPON OIL CORPORATION, Yokohama-shi, Kanagawa, 231-0815 (JP); KINOSHITA, Hirotsugu, NIPPON OIL CORPORATION, Tokyo, 105-8412 (JP)
(74) Representative: Pfau, Anton Konrad
(86) International application number: PCT/JP2006/306046
(87) International publication number: WO 2006/109541

(57) **Abstract**

The present invention provides a grease composition for a one-way clutch that can achieve low-temperature engageability, anti-wear properties, and high-temperature prolonged working life in a high level and well-balanced manner. The grease composition comprises a synthetic oil with a last non-seizure load of 314 N or less, as determined by Four-Ball Extreme Pressure Test according to ASTM D2596 and a pour point of -35°C or lower and a thickner.

## Description

### [Field of the Invention]

The present invention relates to grease compositions for a one-way clutch.

### [Background of the Invention]

A one-way clutch is composed of a driving shaft component, a driven shaft component, and a rolling member such as rollers or balls, sandwiched between the driving shaft component and driven shaft component. When the driving shaft component rotates in one direction, the rolling member engages with the driving shaft component and driven shaft component. The resulting torque generated thereby is transmitted via the rolling member to and rotates the driven shaft component in the same direction. However, when the driving shaft component rotates in the opposite direction or the driven shaft component rotates faster than the driving shaft component, the engagement is automatically released thereby failing to transmit the torque to the driven shaft component.

The ability of the rolling member to engage with the driving and driven components is referred to as "engageability".

The one-way clutch has been used for example in alternators, starter motors, compressors of air conditioners, pulleys of water pumps, and engine starters of automobiles. The one-way clutch used for these applications is required to possess properties such as engageability, anti-wear properties, high-temperature prolonged working life, or the like. Accordingly, in order to retain these properties, greases containing a synthetic hydrocarbon oil as the base oil have been mainly used for the one-way clutch.

In recent years, there has been a tendency that the grease for the one-way clutch is strongly demanded to be improved in engageability at low temperatures of -30°C or lower. However, the greases containing a synthetic hydrocarbon oil as the base oil is not necessarily satisfactory in low temperature engageability and thus should be improved so as to obtain sufficient engageability for automobiles used under low-temperature environments.

Due to the metallic contact between the rolling member and the driving and driven shaft components in a one-way clutch upon engagement, there is a strong demand that the grease is improved in anti-wear properties for prolonging the working life of the one-way clutch. Further, since an alternator or an engine starter has electric contact points, the grease used for these devices has been demanded not to adversely affect such electric contact points.

### [Disclosure of the Invention]

The present invention was accomplished in view of these circumstances and has an object to provide a grease composition for a one-way clutch, that can achieve low-temperature engageability, anti-wear properties, and high-temperature prolonged working life in a high level and well-balanced manner.

The present invention was completed as the result of the extensive research and study carried out the inventors of the present invention. That is, the grease composition for a one-way clutch of the present invention comprises a synthetic oil with a last non-seizure load of 314 N or less, as determined by Four-Ball Extreme Pressure Test according to ASTM D2596 and a pour point of -35°C or lower and a thickner.

Inclusion of a thickner to the specific synthetic oil can achieve low-temperature engageability, anti-wear properties, and high-temperature prolonged working life all together in a high level and well-balanced manner. Therefore, the grease composition for a one-way clutch of the present invention can effectively enhance the performances of a one-way clutch.

Preferably, the grease composition for a one-way clutch of the present invention further contains one or more types selected from the group consisting of sulfur-containing extreme pressure additives, phosphorus-containing extreme pressure additives, organic zinc compounds, organic molybdenum compounds, and metallic detergents. Addition of these additives can further enhance the anti-wear properties.

The present invention will be described in detail below.

The lubricating base oil of the grease composition for a one-way clutch.of the present invention is a synthetic oil with a last non-seizure load of 314 N or less, as determined by Four-Ball Extreme Pressure Test according to ASTM D2596 and a pour point of -35°C or lower.

Specific examples of such a synthetic oil include poly-a -olefins such as polybutene, 1-octene oligomer and 1-decene oligomer, and hydrogenated compounds thereof; hydrocarbon-based oils such as alkylnaphthalenes and alkylbenzenes; and oxygen-containing synthetic oils such as esters, polyoxyalkylene glycols, polyvinyl ethers, ketones, polyphenyl ethers, silicones, polysiloxanes, and perfluoroethers.

Among these synthetic oils, those containing silicon, such as silicone oils adversely affect electric contacting points. Therefore, the synthetic oil used herein is preferably a synthetic oil free of silicon, more preferably an ester or a polyoxyalkylene glycol, particularly preferably a polyoxyalkylene glycol because the resulting composition will be less in evaporation loss, resulting in prolonged working life.

Examples of esters which may be used in the present invention include aromatic esters, dibasic acid esters, polyol esters, complex esters, carbonic acid ester, and mixtures thereof.

Examples of the aromatic esters include esters of monovalent to hexavalent, preferably monovalent to tetravalent, more preferably monovalent to trivalent aromatic carboxylic acids and aliphatic alcohols having 1 to 18, preferably 1 to 12 carbon atoms. Examples of the monovalent to hexavalent aromatic carboxylic acids include benzoic acid, phthalic acid, isophthalic acid, terephthalic acid, trimellitic acid, pyromellitic acid, and mixtures thereof. The aliphatic alcohols having 1 to 18 carbon atoms may be of straight-chain or branched. Specific examples include methanol, ethanol, straight-chain or branched propanol, straight-chain or branched butanol, straight-chain or branched pentanol, straight-chain or branched hexanol, straight-chain or branched heptanol, straight-chain or branched octanol, straight-chain or branched nonanol, straight-chain or branched decanol, straight-chain or branched undecanol, straight-chain or branched dodecanol, straight-chain or branched tridecanol, straight-chain or branched tetradecanol, straight-chain or branched pentadecanol, straight-chain or branched hexadecanol, straight-chain or branched heptadecanol, straight-chain or branched octadecanol, and mixtures thereof.

Specific examples of the aromatic esters obtained using the above-noted aromatic carboxylic acids and aliphatic alcohols include dibutyl phthalate, di(2-ethylhexyl) phthalate, dinonyl phthalate, didecyl phthalate, didodecyl phthalate, ditridecyl phthalate, tributyl trimellitate, tri(2-ethylhexyl) trimellitate, trinonyl trimellitate, tridecyl trimellitate, tridodecyl trimellitate, and tritridecyl trimellitate. Of course, when an aromatic carboxylic acid of divalent or more is used, the ester may be a simple ester composed of one type of aliphatic alcohol or a complex ester composed of two or more types of aliphatic alcohols.

Examples of the dibasic acid esters include esters of chain or cyclic aliphatic dibasic acids having 5 to 10 carbon atoms, such as glutaric acid, adipic acid, pimelic acid, suberic acid, azelaic acid, sebacic acid, 1,2-cyclohexane dicarboxylic acid, and 4-cyclohexene-1,2-dicaboxylic acid with straight-chain or branched monohydric alcohols having 1 to 15 carbon atoms, such as methanol, ethanol, propanol, butanol, pentanol, hexanol, heptanol, octanol, nonanol, decanol, undecanol, dodecanol, tridecanol, tetradecanol, and pentadecanol, and mixtures thereof. More specific examples include ditridecyl glutarate, di(2-ethylhexyl) adipate, disodecyl adipate, ditridecyl adipate, di(2-ethylhexyl) sebacate, a diester of 1,2-cyclohexene dicarboxylic acid and a monohydric alcohol having 4 to 9 carbon atoms, a diester of 4-cyclohexane-1,2-dicarboxylic acid and a monohydric alcohol having 4 to 9 carbon atoms, and mixtures thereof.

The polyol esters are preferably esters of diols or polyols having 3 to 20 hydroxyl groups and fatty acids. Specific examples of the diols include ethylene glycol, 1,3-propanediol, propylene glycol, 1,4-butanedioil, 1,2-butanediol, 2-methyl-1,3-propanediol, 1,5-pentanediol, neopentyl glycol, 1,6-hexanediol, 2-ethyl-2-methyl-1,3-propanediol, 1,7-heptanediol, 2-methyl-2-propyl-1,3-propanediol, 2,2-diethyl-1,3-propanediol, 1,8-octanediol, 1,9-nonanediol, 1,10-decanediol, 1,11-undecanediol, and 1,12-dodecanediol. Specific examples of the polyols include polyhydric alcohols such as trimethylolethane, trimethylolpropane, trimethylolbutane, di-(trimethylolpropane), tri-(trimethylolpropane), pentaerythritol, di-(pentaerythritol), tri-(pentaerythritol), glycerin, polyglycerins (dimmer to eicosamer of glycerin), 1,3,5-pentanetriol, sorbitol, sorbitan, sorbitol-glycerin condensate, adonitol, arabitol, xylitol, and mannitol; saccharide such as xylose, arabinose, ribose, rhamnose, glucose, fructose, galactose, mannose, sorbose, cellobiose, maltose, isomaltose, trehalose, sucrose, raffinose, gentianose, and melezitose; partially eterified products thereof; and methyl glucoside (glycoside). Among these, preferred polyols are hindered alcohols such as neopentyl glycol, trimethylolethane, trimethylolpropane, trimethylolbutane, di-(trimethylolpropane), tri-(trimethylolpropane), pentaerythritol, di-(pentaerythritol), and tri-(pentaerythritol). The polyol may be any one type of or a mixture of two or more types of these polyols.

There is no particular restriction on the carbon number of the fatty acids used for the polyol esters. However, fatty acids having 1 to 24 carbon atoms are generally used. Among the fatty acids having 1 to 24 carbon atoms, preferred are those having 3 or more carbon atoms, more preferred are those having 4 or more carbon atoms, and further more preferred are those having 5 or more carbon atoms in view of lubricity. Also, preferred are those having 18 or fewer carbon atoms, more preferred are those having 12 or fewer carbon atoms, and further more preferred are those having 9 or fewer carbon atoms.

The polyol ester may be an ester of a polyol and one type of fatty acid or two or more types of fatty acids. However, if greater importance is given to all lubricity, hydrolysis stability, and low-temperature characteristics, the polyol ester is preferably an ester of a polyol and a mixture of two or more types of fatty acids. When the polyol ester is an ester of a polyol and two or more types of fatty acids, it may be either a chemical mixture produced by reacting a polyol with a fatty acid mixture or a physical mixture produced by reacting a polyol with each fatty acid and then mixing the resulting esters.

The fatty acid may be a straight-chain or branched fatty acid. However, the fatty acid is preferably a straight-chain fatty acid in view of lubricity while the fatty acid is preferably a branched fatty acid in view of hydrolysis stability and low-temperature characteristics. If greater importance is given to hydrolysis stability and low-temperature characteristics, the fatty acid is preferably one type of branched fatty acid or a 100 percent mixture of two or more types of branched fatty acids. If greater importance is given to all lubricity, hydrolysis stability, and low-temperature characteristics, the fatty acid is preferably a mixture of one or more types of straight-chain fatty acids and one or more types of branched fatty acids, particularly preferably a mixture of a straight-chain fatty acid having 5 to 9 carbon atoms and a branched fatty acid having 5 to 9 carbon atoms. The ratio of the straight-chain and branched fatty acids is in the range of preferably 20:80 to 80:20, more preferably 30:70 to 70:30, more preferably 40:60 to 60:40.

The fatty acid may be a saturated fatty acid or an unsaturated fatty acid.

Specific examples of the fatty acid include pentanoic acid, hexenoic acid, heptanoic acid, octanonic acid, nonanoic acid, decanoic acid, undecanoic acid, dodecanoic acid, tridecanoic acid, tetradecanoic acid, pentadecanoic acid, hexadecanoic acid, heptadecanoic acid, octadecanoic acid, nonadecanoic acid, eicosanoic acid, and olefinic acid, all of which may be straight-chain or branched fatty acids or fatty acids whose α carbon atom is a quaternary carbon atom (neo acid). Among these, preferred are valeric acid (n-pentanoic acid), caproic acid (n-hexanoic acid), enanthic acid (n-heptanoic acid), caprylic acid (n-octanoic acid), pelargonic acid (n-nonanoic acid), capric acid (n-decanoic acid), oleic acid (cis-9-octadecenoic acid), isopentanoic acid (3-methylbutanoic acid), 2-methylhexanoic acid, 2-ethylpentanoic acid, 2-ethylhexanoic acid, and 3,5,5-trimethylhexanoic acid.

The polyol ester used herein may be a partial ester wherein a part of the hydroxyl groups remains unesterified or a full ester wherein all of the hydroxyl groups are esterified, as long as the polyol ester has two or more ester groups. Further, the polyol ester may be a mixture of a partial ester and a full ester but is preferably a full ester.

The complex ester is an ester of a fatty acid and a dibasic acid with a monohydric alcohol and a polyol. The fatty acid, dibasic acid, monohydric alcohol, and polyol may be those described with respect to the above-mentioned dibasic acid ester and polyol esters.

The carbonic acid ester is a compound having a carbonic, acid ester bond represented by formula (1) below per molecule:

-O-CO-O- (1).

The number of the carbonic acid ester bond represented by formula (1) may be one or more per molecule.

The alcohol constituting the carbonic acid ester may be any of.the monohydric alcohols or polyols exemplified with respect to the aforesaid dibasic acid esters and polyol esters, polyglycols, or polyols to which a polyglycol is added. Alternatively, there may be used compounds produced using carbonic acid and fatty acids and/or dibasic acids.

Needless to mention, when an ester is used, it may be a compound of a single structure or a mixture of two or more compounds with different structures.

Among the above-exemplified esters, preferred are dibasic acid esters, polyol esters, and carbonic acid esters.

Specific examples of the dibasic acid esters preferably used in the present invention include dibasic acid esters of at least one type of monohydric alcohol selected from the group consisting of butanol, pentanol, hexanol, heptanol, octanol, and nonanol and at least one type of dibasic acid selected from the group consisting of 1,2-cyclohexane dicarboxylic acid and 4-cyclohexene-1,2-dicarboxylic acid, and mixtures thereof.

Among the above-exemplified polyol esters, more preferred are esters of hindered alcohol such as neopentyl glycol, trimethylolethane, trimethylolpropane, trimethylolbutane, di-(trimethylolpropane), tri-(trimethylolpropane), pentaerythritol, di-(pentaerythritol), and tri-(pentaerythritol) and still more preferred are esters of neopentyl glycol, trimethylolethane, trimethylolpropane, trimethylolbutane, and pentaerythritol because of their excellent hydrolysis stability. Most preferred is an ester of pentaerythritol because of its particularly excellent hydrolysis stability.

Specific examples of the polyol esters preferably used in the present invention include diesters, triesters, and tetraesters, of at least one type of fatty acid selected from the group consisting of valeric acid, caproic acid, enanthic acid, caprylic acid, pelargonic acid, capric acid, oleic acid, isopentanoic acid, 2-methylhexanoic acid, 2-ethylpentanoic acid, 2-ethylhexanoic acid, and 3, 5, 5-trimethylhexanoic acid and at least one type of alcohol selected from the group consisting of neopentyl glycol, trimethylolethane, trimethylolpropane, trimethylolbutane, and pentaerythritol, and mixtures thereof.

Among the carbonic acid esters, preferred are those having a structure represented by the formula below:

(X¹O)_{b}-B-[O-(A¹O)_{c}-CO-O-(A²O)_{d}-Y¹]ₐ (2)

wherein X¹ is hydrogen, an alkyl group, a cycloalkyl group, or a group represented by formula (3) below, A¹ and A² may be the same or different and are each independently an alkylene group having 2 to 4 carbon atoms, Y¹ is hydrogen, an alkyl group or a cycloalkyl group, B is a residue of a compound having 3 to 20 hydroxyl groups, a is an integer of 1 to 20, b is an integer of 0 to 19 so that a + b = 3 to 20, c is an integer of 0 to 50, and d is an integer of 1 to 50,

y²-(OA³)ₑ- (3)

wherein Y² is hydrogen, an alkyl group or a cycloalkyl group, A³ is an alkylene group having 2 to 4 carbon atoms, and e is an integer of 1 to 50.

In formula (2), X¹ is hydrogen, an alkyl group, a cycloalkyl group, or a group represented by formula (3). There is no particular restriction on the carbon number of the alkyl group. However, the carbon number is usually from 1 to 24, preferably from 1 to 18, more preferably from 1 to 12. The alkyl group may be straight-chain or branched.

Specific examples of the alkyl group having 1 to 24 carbon atoms include methyl, ethyl, n-propyl, isopropyl, n-butyl, isobutyl, sec-butyl, tert-butyl, straight-chain or branched pentyl, straight-chain or branched hexyl, straight-chain or branched heptyl, straight-chain or branched octyl, straight-chain or branched nonyl, straight-chain or branched decyl, straight-chain or branched undecyl, straight-chain or branched dodecyl, straight-chain or branched tridecyl, straight-chain or branched tetradecyl, straight-chain or branched pentadecyl, straight-chain or branched hexadecyl, straight-chain or branched heptadecyl, straight-chain or branched octadecyl, straight-chain or branched nonadecyl, straight-chain or branched eicosyl, straight-chain or branched heneicosyl, straight-chain or branched docosyl, straight-chain or branched tricosyl, and straight-chain or branched tetracosyl.

Specific examples of the cycloalkyl group include cyclopentyl, cyclohexyl, and cycloheptyl groups.

Examples of the alkylene group having 2 to 4 carbon atoms for A³ in formula (3) include ethylene, propylene, trimethylene, butylene, tetramethylene, 1-methyltrimethylene, 2-methyltrimethylene, 1,1-dimethylethylene, and 1,2-dimethylethylene groups.

In formula (3), Y² is hydrogen, an alkyl group, or a cycloalkyl group. There is no particular restriction on the carbon number of the alkyl group. However, the carbon number is usually from 1 to 24, preferably from 1 to 18, more preferably from 1 to 12. The alkyl group may be straight-chain or branched. Examples of the alkyl group having 1 to 24 carbon atoms include those exemplified with respect to X¹.

Specific examples of the cycloalkyl group include cyclopentyl, cyclohexyl, and cycloheptyl groups.

Preferably, Y² is hydrogen or an alkyl group having 1 to 12 carbon atoms, and more preferably Y² is any of hydrogen, methyl, ethyl, n-propyl, iso-propyl, n-butyl, iso-butyl, sec-butyl, tert-butyl, n-pentyl, iso-pentyl, neo-pentyl, n-hexyl, iso-hexyl, n-heptyl, iso-hetpyl, n-octyl, iso-octyl, n-nonyl, iso-nonyl, n-decyl, iso-decyl, n-undecyl, iso-undecyl, n-dodecyl, and iso-dodecyl groups. The letter "e" is an integer of 1 to 50.

Preferably, X¹ is hydrogen, an alkyl group having 1 to 12 carbon atoms, or a group represented by formula (3), and more preferably X¹ is any of hydrogen, methyl, ethyl, n-propyl, iso-propyl, n-butyl, iso-butyl, sec-butyl, tert-butyl, n-pentyl, iso-pentyl, neo-pentyl, n-hexyl, iso-hexyl, n-heptyl, iso-hetpyl, n-octyl, iso-octyl, n-nonyl, iso-nonyl, n-decyl, iso-decyl, n-undecyl, iso-undecyl, n-dodecyl, iso-dodecyl groups, and a group represented by formula (3).

Examples of the compound having B as a residue and 3 to 20 hydroxyl groups include the above-described polyols.

In formula (2), A¹ and A² may be the same or different and are each independently an alkylene group having 2 to 4 carbon atoms. Specific examples of the alkylene group include ethylene, propylene, trimethylene, butylene, tetramethylene, 1-methyltrimethylene, 2-methyltrimethylene, 1,1-dimethylethylene, and 1,2-dimethylethylene groups.

In formula (2), Y¹ is hydrogen, an alkyl group, or a cycloalkyl group. There is no particular restriction on the carbon number of the alkyl group. However, the carbon number is usually from 1 to 24, preferably from 1 to 18, more preferably from 1 to 12. The alkyl group may be straight-chain or branched. Examples of the alkyl group having 1 to 24 carbon atoms include those exemplified with respect to X¹.

Specific examples of the cycloalkyl group include cyclopentyl, cyclohexyl, and cycloheptyl groups.

Preferably, Y¹ is hydrogen or an alkyl group having 1 to 12 carbon atoms, and more preferably Y¹ is any of hydrogen, methyl, ethyl, n-propyl, iso-propyl, n-butyl, iso-butyl, sec-butyl, tert-butyl, n-pentyl, iso-pentyl, neo-pentyl, n-hexyl, iso-hexyl, n-heptyl, iso-hetpyl, n-octyl, iso-octyl, n-nonyl, iso-nonyl, n-decyl, iso-decyl, n-undecyl, iso-undecyl, n-dodecyl, and iso-dodecyl groups.

In formulas (2) and (3), c, d, and d each indicate the polymerization degree of the polyoxyalkylene chain. The polyoxyalkylene chains in the molecules may be the same or different. When the carbonic acid ester represented by formula (2) has a plurality of different polyoxyalkylene chains, there is no particular restriction on the polymerization mode of the oxyalkylene groups, which may be random- or block-polymerization.

The carbonic acid ester used in the present invention may be produced by any method. For example, the carbonic acid ester may be produced by allowing an alkyleneoxide to add to a polyol compound so as to produce a polyalkelene glycol polyol ether, which is then reacted with chloroformate at a temperature of 0 to 30°C in the presence of an alkali metal hydroxide such as sodium hydroxide or potassium hydroxide, an alkali metal alkoxide such as sodium methoxide or sodium ethoxide, or an alkali such as metallic sodium. Alternatively, the carbonic acid ester may be produced by allowing a polyalkylene glycol polyol ether to react with a carbonic acid source such as carbonic acid diester or phosgene at a temperature of 80 to 150°C in the presence of an alkali metal hydroxide such as sodium hydroxide or potassium hydroxide, an alkali metal alkoxide such as sodium methoxide or sodium ethoxide, or an alkali such as metallic sodium. Thereafter, if necessary, free hydroxyl groups are etherified.

Although the products produced from the aforesaid materials may be refined to remove by-products or unreacted products, these products if contained in small amounts in the grease composition of the present invention would not be an obstacle as long as the excellent properties of the grease composition are not diminished.

When the carbonic acid ester is used in the present invention, it may be a compound of a single structure or a mixture of two or more compounds with different structures. There is no particular restriction on the molecular weight of the carbonic acid ester used in the present invention. However, the number-average molecular weight is preferably from 200 to 4,000, preferably from 300 to 3,000 with the objective of further enhancing the sealability of a compressor. The kinematic viscosity of the carbonic acid ester is preferably from 2 to 150 mm²/s, more preferably from 4 to 100 mm²/s at 100°C.

Examples of the polyoxyalkylene glycol used in the present invention include compounds represented by the formula below:

R¹-[(OR²)_{f}-OR³] _{g} (4)

wherein R¹ is hydrogen, an alkyl group having 1 to 10 carbon atoms, an acyl group having 2 to 10 carbon atoms, or a residue of a compound having 2 to 8 hydroxyl groups, R² is an alkylene group having 2 to 4 carbon atoms, R³ is hydrogen, an alkyl group having 1 to 10 carbon atoms, or an acyl group having 2 to 10 carbon atoms, f is an integer of 1 to 80, and g is an integer of 1 to 8.

In formula (4) , the alkyl group for R¹ and R³ may be straight-chain, branched, or cyclic. Specific examples of the alkyl group include methyl, ethyl, n-propyl, isopropyl, straight-chain or branched butyl, straight-chain or branched pentyl, straight-chain or branched hexyl, straight-chain or branched heptyl, straight-chain or branched octyl, straight-chain or branched nonyl, straight-chain or branched decyl, cyclopentyl, and cyclohexyl groups. The carbon number of the alkyl group is preferably from 1 to 6.

The alkyl group portion of the acyl group for R¹ and R³ may be straight-chain, branched, or cyclic. Specific examples of the alkyl group portion of the acyl group include those having 1 to 9 carbon atoms among the above-exemplified alkyl groups. The carbon number of the acyl group is preferably from 2 to 6.

When both of the groups for R¹ and R³ are alkyl groups or acyl groups, they may be the same or different. When g is 2 or greater, a plurality of groups for R¹ and R³ in the same molecule may be the same or different.

When R¹ is a residue of a compound having 2 to 8, hydroxyl groups, the compound may be chain or cyclic. Specific examples of the compound having two hydroxyl groups include ethylene glycol, 1,3-propanediol, propylene glycol, 1,4-butanedioil, 1,2-butanediol, 2-methyl-1,3-propanediol, 1,5-pentanediol, neopentyl glycol, 1,6-hexanediol, 2-ethyl-2-methyl-1,3-propanediol, 1,7-heptanediol, 2-methyl-2-propyl-1,3-propanediol, 2,2-diethyl-1,3-propanediol, 1,8-octanediol, 1,9-nonanediol, 1,10-decanediol, 1,11-undecanediol, and 1,12-dodecanediol.

Specific examples of the compound having 3 to 8 hydroxyl groups include polyhydric alcohols such as trimethylolethane, trimethylolpropane, trimethylolbutane, di-(trimethylolpropane), tri-(trimethylolpropane), pentaerythritol, di-(pentaerythritol), tri-(pentaerythritol), glycerin, polyglycerins (dimmer to hexamer of glycerin), 1,3,5-pentanetriol, sorbitol, sorbitan, sorbitol-glycerin condensate, adonitol, arabitol, xylitol, and mannitol; saccharides such as xylose, arabinose, ribose, rhamnose, glucose, fructose, galactose, mannose, sorbose, cellobiose, maltose, isomaltose, trehalose, sucrose, raffinose, gentianose, and melezitose; partially eterified products thereof; and methyl glucoside (glycoside).

In the polyoxyalkylene glycol represented by formula (4), at least either one of R¹ or R³ is preferably an alkyl group (more preferably an alkyl group having 1 to 4 carbon atoms), particularly preferably a methyl group. Further, in view of thermal/chemical stability, both R¹ and R³ are preferably alkyl groups (more preferably alkyl groups having 1 to 4 carbon atoms), particularly preferably a methyl group. Further, in view of easy manufacturing and cost therefor, preferably, either one of R¹ or R³ is an alkyl group (more preferably an alkyl group having 1 to 4 carbon atoms) and the other is hydrogen, and particularly preferably, either one of R¹ or R³ is a methyl group and the other is hydrogen.

In formula (4), R² is an alkylene group having 2 to 4 carbon atoms. Examples of such alkylene groups include ethylene, propylene, and butylene groups. Examples of the oxyalkylene group, which is a recurring unit represented by OR² include oxyethylene, oxypropylene, and oxybutylene groups. The same oxylalkylene groups or two or more different oxyalkylene groups may be contained in the same molecule.

Among the polyoxyalkylene glycols represented by formula (4), preferred are copolymers containing an oxyethylene group (EO) and an oxypropylene group (PO) in view of viscosity-temperature characteristics. In this case, the ratio of the oxyethylene group in the total of the oxyethylene group and the oxypropylene group (EO/(PO+EO)) is within the range of preferably 0. 1 to 0.8, more preferably 0.3 to 0.6 in view of seizure load and viscosity-temperature characteristics.

In view of hydroscopicity and thermal stability, the (EO/(PO+EO)) is within the range of preferably 0 to 0.5, more preferably 0 to 0.2, most preferably 0 (i.e., propyleneoxide homopolymer).

In formula (4), f is an integer of 1'to 80, and g is an integer of 1 to 8. For example, when R³ is an alkyl or acyl group, g is 1. When R³ is an residue of a compound having 2 to 8 hydroxyl groups, g is the number of the hydroxyl group of the compound.

There is no particular restriction on the product of f and g (f x g). However, in order to achieve requisite properties as the base oil in a well-balanced manner, the average of f x g is preferably from 6 to 80.

Among the polyoxyalkylene glycols having the above-described structure, preferred are polyoxypropylene glycol dimethyl ether represented by the formula below:

CH₃O-(C₃H₆O)ₕ-CH₃ (5)

wherein h is an integer of 6 to 80 and polyoxyethylene polyoxypropylene glycol dimethyl ether represented by the formula below:

CH₃O-(C₂H₄O)ᵢ-(C₃H₆O)ⱼ-CH₃ (6)

wherein i and j are each 1 or greater such that the total of i and j is from 6 to 80, in view of economical efficiency and the above-described effects, as well as polyoxypropylene glycol monobutyl ether represented by the formula below:

C₄H₉O-(C₃H₆O)ₖ-H (7)

wherein k is an integer of 6 to 80,
polyoxypropylene glycol monomethyl ether represented by the formula below:

CH₃O-(C₃H₆O)₁-H (8)

wherein 1 is an integer of 6 to 80, polyoxyethylene polyoxypropylene glycol monomethyl ether represented by the formula below:

CH₃O-(C₂H₄O)ₘ-(C₃H₆O)ₙ-H (9)

wherein m and n are each an integer of 1 or greater so that the total of m and n is from 6 to 80, polyoxyethylene polyoxypropylene glycol monobutyl ether represented by the formula below:

C₄H₉Oₘ-(C₂H₄O)ₘ-(C₃H₆O)ₙ-H (10) (10)

wherein m and n are each an integer of 1 or greater so that the total of m and n is from 6 to 80, and polyoxypropylene glycol diacetate represented by the formula below:

CH₃COO-(C₃H₆O)₁-COCH₃ (11)

wherein 1 is an integer of 6 to 80, in view of economical efficiency.

In the present invention, the above-described polyoxyalkylene glycol may be a polyoxyalkylene glycol derivative having at least one structural unit represented by the formula below: 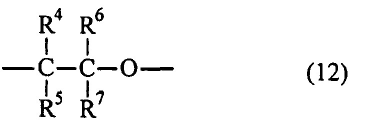 wherein R⁴ to R⁷ may be the same or different and are each independently hydrogen, a monovalent hydrocarbon group having 1 to 10 carbon atoms, or a group represented by the formula below: 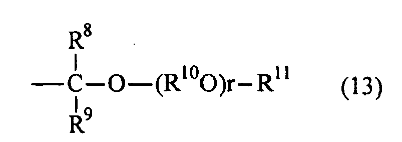 wherein R⁸ and R⁹ may be the same or different and are each independently hydrogen, a monovalent hydrocarbon group having 1 to 10 carbon atoms or an alkoxyalkyl group having 2 to 20 carbon atoms, R¹⁰ is an alkylene group having 2 to 5 carbon atoms, a substituted alkylene group having an alkyl group as a substituent and 2 to 5 carbon atoms in total or a substituted alkylene group having an alkoxyalkyl group as a substituent and 4 to 10 carbon atoms in total, r is an integer of 0 to 20, and R¹¹ is a monovalent hydrocarbon having 1 to 10 carbon atoms, and at least one of R⁴ to R⁷ is a group represented by formula (13).

In formula (12), R⁹ to R⁷ are each hydrogen, a monovalent hydrocarbon group having 1 to 10 carbon atoms, or a group represented by formula (13). Specific examples of the monovalent hydrocarbon group having 1 to 10 carbon atoms include straight-chain or branched alkyl groups having 1 to 10 carbon atoms, straight-chain or branched alkenyl groups having 2 to 10 carbon atoms, cycloalkyl or alkylcycloalkyl groups having 5 to 10 carbon atoms, aryl or alkylaryl groups having 6 to 10 carbon atoms, and arylalkyl groups having 7 to 10 carbon atoms. Among these monovalent hydrocarbon groups, preferred are monovalent hydrocarbon groups having 6 or fewer carbon atoms, particularly alkyl groups having 3 or fewer carbon atoms, specifically methyl, ethyl, n-propyl, and isopropyl groups.

In formula (13), R⁸ and R⁹ are each hydrogen, a monovalent hydrocarbon group having 1 to 10 carbon atoms, or an alkoxyalkyl group having 2 to 20 carbon atoms. Among these, preferred are alkyl groups having 3 or fewer carbon atoms and alkoxyalkyl groups having 6 or fewer carbon atoms. Specific examples of the alkyl groups having 3 or fewer carbon atoms include methyl, ethyl, n-propyl, and isopropyl groups. Specific examples of the alkoxyalkyl groups having 2 to 6 carbon atoms include methoxymethyl, ethoxymethyl, n-propoxymethyl, isopropoxymethyl, n-butoxymethyl, isobutoxymethyl, sec-butoxymethyl, tert-butoxymethyl, pentoxymethyl (inclusive of all isomers), methoxyethyl (inclusive of all isomers), ethoxyethyl (inclusive of all isomers), propoxyethyl (inclusive of all isomers), butoxyethyl (inclusive of all isomers), methoxypropyl (inclusive of all isomers), ethoxypropyl (inclusive of all isomers), propoxypropyl (inclusive of all isomers), methoxybutyl (inclusive of all isomers), ethoxybutyl (inclusive of all isomers), and methoxypentyl (inclusive of all isomers) groups.

In formula (13), R¹⁰ is an alkylene group having 2 to 5 carbon atoms, a substituted alkylene group having an alkyl group as a substituent and 2 to 5 carbon atoms in total or a substituted alkylene group having an alkoxyalkyl group as a substituent and 4 to 10 carbon atoms in total, preferably an alkylene group having 2 to 4 carbon atoms or a substituted ethylene group having 6 or fewer carbon atoms in total. Specific examples of the alkylene group having 2 to 4 carbon atoms include ethylene, propylene, and butylene groups. Specific examples of the substituted ethylene group having 6 or fewer carbon atoms in total include 1-(methoxymethyl)ethylene, 2-(methoxymethyl)ethylene, 1-(methoxyethyl)ethylene, 2-(methoxyethyl) ethylene, 1-(ethoxymethyl)ethylene, 2-(ethoxymethyl)ethylene, 1-methoxymethyl-2-methylethylene, 1,1-bis(methoxymethyl)ethylene, 2,2-bis(methoxymethyl)ethylene, 1,2-bis(methoxymethyl)ethylene, 1-methyl-2-methoxymethylethylene, 1-methoxymethyl-2-methylethylene, 1-ethyl-2-methoxymethylethylene, 1-methoxymethyl-2-ethylethylene, 1-methyl-2-ethoxymethylethylene, 1-ethoxymethyl-2-methylethylene, 1-methyl-2-methoxyethylethylene, and 1-methoxyethyl-2-methylethylene groups.

In formula (13), R¹¹ is a monovalent hydrocarbon group having 1 to 10 carbon atoms. Specific examples include straight-chain or branched alkyl groups having 1 to 10 carbon atoms, straight-chain or branched alkenyl groups having 2 to 10 carbon atoms, cycloalkyl or alkylcyloalkyl groups having 5 to 10 carbon atoms, aryl or alkylaryl groups having 6 to 10 carbon atoms, and arylalkyl groups having 7 to 10 carbon atoms. Among these, preferred are monovalent hydrocarbon groups having 6 or fewer carbon atoms, and particularly preferred are alkyl groups having 3 or fewer carbon atoms, such as methyl, ethyl, n-propyl, and isopropyl groups.

In formula (12) , at least one of R⁴ to R⁷ is a group represented by formula (1 3.). Particularly preferably, at least either one of R⁴ or R⁶ is a group represented by formula (13), and the other and R ⁵ and R⁷ are each independently hydrogen or a monovalent hydrocarbon group having 1 to 10 carbon atoms.

The polyoxyalkylene glycol having structural units represented by formula (12), preferably used in the present invention may be broadly classified into three types, i.e., a homopolymer composed of only structural units represented by formula (12); a copolymer composed of two or more types of structural units with different structure represented by formula (12); and a copolymer composed of structural units represented by formula (12) and other structural units, for example, represented by the formula below: 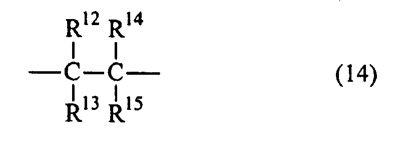 wherein R¹² to R¹⁵ may be the same or different and are each independently hydrogen or an alkyl group having 1 to 3 carbon atoms.

Preferred examples of such a homopolymer include those having 1 to 20 structural units A represented by formula (12) and the terminal groups which are each a hydroxyl group, an acyloxy group having 1 to 10 carbon atoms, or an alkoxy or aryloxy group having 1 to 10 carbon atoms. Preferred examples of such a copolymer include those having 1 to 200 two types of structural units A and B represented by formula (12) individually or 1 to 200 structural units A represented by formula (12) and 1 to 200 structural units C represented by formula (12) and the terminal groups which are each a hydroxyl group, an acyloxy group having 1 to 10 carbon atoms, or an alkoxy or aryloxy group having 1 to 10 carbon atoms. These copolymers may be any of alternating copolymers, random copolymers or block copolymers, of structural units A and B (or C), or graft copolymers wherein structural units B are graft-bonded to the main chain of structural unit A.

The synthetic oil used in the present invention has a last non-seizure load of 314 N (32 kgf)or less, preferably 235 N (24 kgf) or less as determined by Four-Ball Extreme Pressure Test according to ASTM D2596. When the synthetic oil has a last non-seizure load in excess of 314 N, the resulting grease composition fails to exhibit sufficient engageability.

The pour point of the synthetic oil is -35°C or lower, preferably -40°C or lower. When the pour point is higher than -35°C, the kinematic viscosity of the resulting grease composition at low temperatures would be too high, resulting in insufficient engageability.

There is no particular restriction on the kinematic viscosity at 40°C, which is however, preferably from 1 to 2,000. mm²/s, more preferably from 2 to 500 mm²/s, and particularly preferably from 3 to 100 mm²/s.

The thickner used in the present invention may be any thickner such as soap thickners such as metallic soaps and complex metallic soaps and non-soap thickners such as bentone, silica gel, urea thickners (urea compounds, urea/urethane compounds, urethane compounds). Among these, preferred are urea compounds, urea/urethane compounds, urethane compounds, and mixtures thereof in view of heat resistance.

Examples of the soap thickner include sodium soap, calcium soap, aluminum soap, and lithium soap.

Examples of the urea thickner include urea compounds such as diurea compounds, triurea compounds, tetraurea compounds, and polyurea compounds (excluding diurea compounds, triurea compounds, and tetraurea compounds), urethane compounds such as urea/urethane compounds and diurethane compounds, and mixtures thereof. Among these, preferred are diurea compounds, urea/urethane compounds, diurethane compounds, and mixtures thereof.

Preferred examples of the urea thickner include compounds represented by formula (15) below. The compound represented by formula (15) encompasses diurea compounds, urea/urethane compounds, and diurethane compounds.

A-CONH-R¹⁶-NHCO-B (15)

In formula (15), R¹⁶ is a divalent organic group, preferably a' divalent hydrocarbon group. Specific examples of the divalent hydrocarbon group include straight-chain or branched alkylene groups, straight-chain or branched alkenylene groups, cycloalkylene groups, arylene groups, alkylarylene groups, and arylalkylene groups. The carbon number of the divalent organic group for R¹⁶ is preferably from 6 to 20, more preferably from 6 to 15.

Preferred examples of the divalent organic group for R¹⁶ include ethylene and 2,2-dimethyl-4-ethylhexylene group as well as groups represented by the following formulas (16) to (25), and particularly preferred are those represented by formulas (17) and (19) :

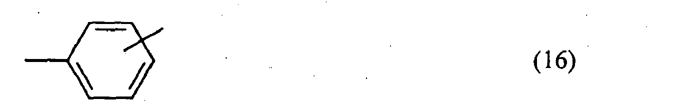

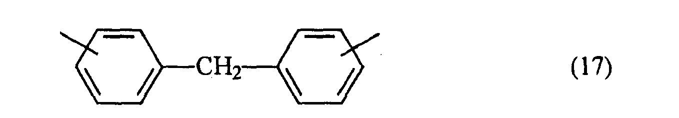

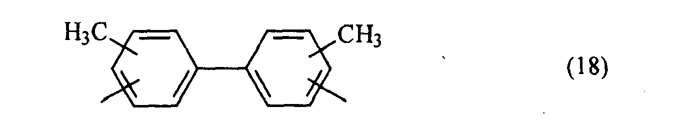

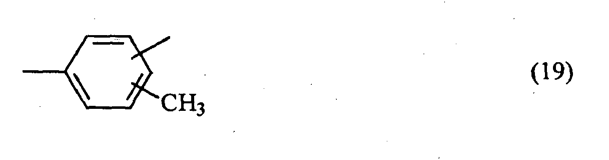

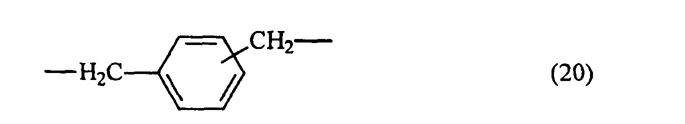

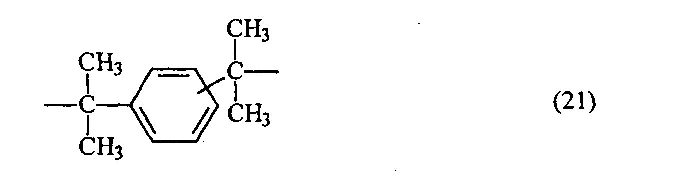

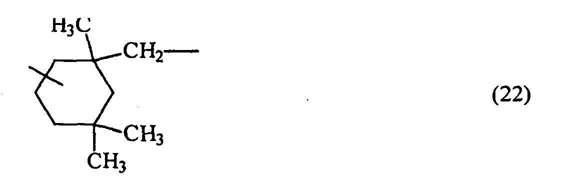

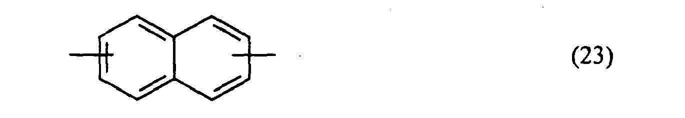

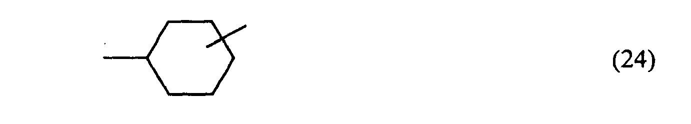

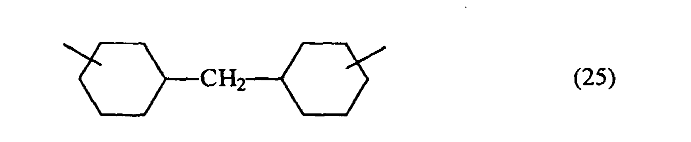

In formula (15), A and B may be the same or different and are each independently a group represented by -NHR¹⁷, -NR¹⁸R¹⁹ or -OR²⁰. Here, R¹⁷, R¹⁸, R¹⁹, and R²⁰ may be the same or different and are each independently a monovalent organic group, preferably a monovalent hydrocarbon group having 6 to 20 carbon atoms.

Examples of the monovalent hydrocarbon group having 6 to 20 carbon atoms for R¹⁷,R¹⁸, R¹⁹, and R²⁰ include straight-chain or branched alkyl groups, straight-chain or branched alkenyl groups, cycloalkyl groups, alkylcycloalkyl groups, aryl groups, alkylaryl groups, and arylalkyl groups. Specific examples include straight-chain or branched alkyl groups such as hexyl, heptyl, octyl, nonyl, decyl, undecyl, dodecyl, tridecyl, tetradecyl, pentadecyl, hexadecyl, heptadecyl, octadecyl, nonadecyl, and eicosyl groups; straight-chain or branched alkenyl groups such as hexenyl, heptenyl, octenyl, nonenyl, decenyl, undecenyl, dodecenyl, tetradecenyl, pentadecenyl, hexadecenyl, heptadecenyl, octadecenyl, nonadecenyl, and eicosenyl groups; cyclohexyl group; alkylcyclohexyl groups such as methylcyclohexyl, dimethylcyclohexyl, ethylcyclohexyl, diethylcyclohexyl, propylcyclohexyl, isopropylcyclohexyl, 1-methyl-3-propylcyclohexyl, butylcyclohexyl, amylcyclohexyl, amylmethylcyclohexyl, hexylcyclohexyl, heptylcyclohexyl, octylcyclohexyl, nonylcyclohexyl, decylcyclohexyl, undecylcyclohexyl, dodecylcyclohexyl, tridecylcyclohexyl, and tetradecylcyclohexyl groups; aryl groups such as phenyl and naphthyl groups; alkylaryl groups such as tolyl, ethylphenyl, xylyl, propylphenyl, cumenyl, methylnaphthyl, ethylnaphthyl, dimethylnaphthyl, and propylnaphthyl groups; and arylalkyl groups such as benzyl, methylbenzyl, and ethylbenzyl groups. Among these, preferred are alkyl, cycloalkyl, alkylcycloalkyl, aryl, and alkylaryl groups in view of heat resistance and sound insulating properties.

The compound represented by formula (15) may be produced by for example allowing a diisocyanate represented by OCN-R¹⁶-NCO to react with any of compounds represented by R¹⁷NH₂, R¹⁸R¹⁹NH and R²⁰OH or a mixture thereof in a base oil at a temperature of 10 to 200°C. R¹⁶, R¹⁷, R¹⁸, R¹⁹, and R²⁰ in the formulas representing the material compounds are the same as those in formula (15).

Among the compounds represented by formula (15), particularly preferred are those of the formula wherein A and B are represented by -NH, i.e., those represented by formula (26) in view of heat resistance. In formula (26), R¹⁶ and R¹⁷ are a divalent organic group and a monovalent organic group, respectively and are equivalent to those described above.

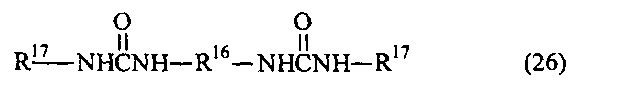

The amount of the thickner in the grease composition is preferably 2 percent by mass or more, more preferably 5 percent by mass or more on the basis of the total mass of the composition. The thickner if contained in an amount of less than 2 percent by mass would be insufficient in effects by addition thereof and fail to make the grease composition greasy sufficiently. The amount of the thickner is preferably 30 percent by mass or less, more preferably 20 percent by mass or less. The thickner if contained in an amount of more than 30 percent by mass would excessively harden the grease composition which would thus fail to obtain sufficient lubricating properties.

In addition to the above-described synthetic base oil and thickner, the grease composition of the present invention preferably contains at least one type selected from the group consisting of sulfur-containing extreme pressure additives, phosphorus-containing extreme pressure additives, organic zinc compounds, organic molybdenum compounds, and metallic detergents. When consideration is given to the environment, preferably no chlorine-based compound is used.

Examples of the sulfur-containing extreme pressure additives include dihydrocarbyl polysulfides, sulfurized esters, sulfurized mineral oils, thiazole compounds, and thiadiazole compounds.

The dihydrocarbyl polysulfides are sulfuric compounds generally referred to as polysulfides or sulfurized olefins and are specifically represented by the formula below:

R²¹-Sx-R²² (27)

In formula (27), R²¹ and R²² may be the same or different and are each independently a straight-chain or branched alkyl group having 3 to 20 carbon atoms, an aryl group having 6 to 20 carbon atoms, an alkylaryl group having 6 to 20 carbon atoms, or an arylalkyl group having 6 to 20 carbon atoms, and x is an integer of 2 to 6, preferably 2 to 5.

Specific examples of the alkyl group for R²¹ and R²² include n-propyl, isopropyl, n-butyl, isobutyl, sec-butyl, tert-butyl, straight-chain or branched pentyl, straight-chain or branched hexyl, straight-chain or branched heptyl, straight-chain or branched octyl, straight-chain or branched nonyl, straight-chain or branched decyl, straight-chain or branched undecyl, straight-chain or branched dodecyl, straight-chain or branched tridecyl, straight-chain or branched tetradecyl, straight-chain or branched pentadecyl, straight-chain or branched hexadecyl, straight-chain or branched heptadecyl, straight-chain or branched octadecyl, straight-chain or branched nonadecyl, and straight-chain or branched eicosyl groups.

Specific examples of the aryl group for R²¹ and R²² include phenyl and naphthyl groups.

Specific examples of the alkylaryl groups for R²¹ and R²² include tolyl (inclusive of all structural isomers), ethylphenyl (inclusive of all structural isomers), straight-chain or branched propylphenyl (inclusive of all structural isomers), straight-chain or branched butylphenyl (inclusive of all structural isomers), straight-chain or branched pentylphenyl (inclusive of all structural isomers), straight-chain or branched hexylphenyl (inclusive of all structural isomers), straight-chain or branched heptylphenyl (inclusive of all structural isomers), straight-chain or branched octylphenyl (inclusive of all structural isomers), straight-chain or branched nonylphenyl (inclusive of all structural isomers), straight-chain or branched decylphenyl (inclusive of all structural isomers), straight-chain or branched undecylphenyl (inclusive of all structural isomers), straight-chain or branched dodecylphenyl (inclusive of all structural isomers), xylyl (inclusive of all structural isomers), ethylmethylphenyl (inclusive of all structural isomers), diethylphenyl (inclusive of all structural isomers), di (straight-chain or branched)propylphenyl (inclusive of all structural isomers), di(straight-chain or branched)butylphenyl (inclusive of all structural isomers), methylnaphthyl (inclusive of all structural isomers), ethylnaphthyl (inclusive of all structural isomers), straight-chain or branched propylnaphthyl (inclusive of all structural isomers), straight-chain or branched butylnaphthyl (inclusive of all structural isomers), dimethylnaphthyl (inclusive of all structural isomers), ethylmethylnaphthyl (inclusive of all structural isomers), diethylnaphthyl (inclusive of all structural isomers), di(straight-chain or branched)propylnaphthyl (inclusive of all structural isomers), and di(straight-chain or branched)butylnaphthyl (inclusive of all structural isomers).

Specific examples of the arylalkyl group for R²¹ and R²² include benzyl, phenylethyl (inclusive of all isomers), and phenylpropyl (inclusive of all isomers).

Preferably, R²¹ and R²² are each independently an alkyl group having 3 to 18 carbon atoms derived from propylene, 1-butene or isobutylene, an aryl group having 6 to 8 carbon atoms, an alkylaryl gro.up having 7 or 8 carbon atoms, or an arylalkyl group having 7 or 8 carbon atoms.

Specific preferred examples of the alkyl group include isopropyl, branched hexyl derived from propylene dimmer (inclusive of all branched isomers), branched nonyl derived from propylene trimer (inclusive of all branched isomers), branched dodecyl derived from propylene tetramer (inclusive of all branched isomers), branched pentadecyl derived from propylene pentamer (inclusive of all branched isomers), branched octadecyl derived from propylene hexamer (inclusive of all branched isomers), sec-butyl, tert-butyl, branched octyl derived from 1-butene dimmer (inclusive of all branched isomers), branched octyl derived from isobutylene dimmer (inclusive of all branched isomers), branched dodecyl derived from 1-butne trimer (inclusive of all branched isomers), branched dodecyl derived from isobutylene trimer (inclusive of all branched isomers), branched hexadecyl derived from 1-butene tetramer (inclusive of all branched isomers), and branched hexadecyl derived from isobutylene tetramer (inclusive of all branched isomers). Specific preferred example of the aryl group includes phenyl group. Specific preferred examples of the alkylaryl include tolyl (inclusive of all structural isomers), ethylphenyl (inclusive of all structural isomers), and xylyl (inclusive of all structural isomers). Specific preferred examples of the arylalkyl group include benzyl and phenetyl (inclusive of all structural isomers).

Further, R²¹ and R²² are each independently more preferably a branched alkyl group having 3 to 18 carbon atoms derived from ethylene or propylene, particularly preferably a branched alkyl group having 6 to 15 carbon atoms derived from ethylene or propylene in view of excellent anti-wear properties.

The dihydrocarbyl polysulfides may be those containing sulfur in any amount but are usually those containing sulfur in an amount of 10 to 55 percent by mass, preferably 20 to 50 percent by mass in view of anti-wear properties.

Examples of the sulfurized esters include those produced by sulfurizing animal or vegetable fats and oils such as beef tallow, lard, fish oil, rapeseed oil, and soybean oil; unsaturated fatty acid esters produced by reacting unsaturated fatty acids such as oleic acid, linolic acid, and fatty acids extracted from the foregoing animal or vegetable fats and oils with various alcohols; or mixtures thereof, by any suitable method.

The sulfurized esters may be those containing sulfur in any amount but are usually those containing sulfur in an amount of 2 to 40 percent by mass, preferably 5 to 35 percent by mass in view of anti-wear properties.

The sulfurized mineral oil is referred to as that wherein elemental sulfur is dissolved in a mineral oil. Example of the mineral oil include paraffinic or naphthenic mineral oils produced by subjecting a lubricating oil fraction produced by atmospheric- or vacuum-distillation of a crude oil to one of or two or more of any suitable combination of refining processes selected from solvent deasphalting, solvent extraction, hydrocracking, solvent dewaxing, catalytic dewaxing, hydrorefining, washing with sulfuric acid, and clay treatment.

The elementary sulfur may be in any form such as bulk, powder, or solution. However, the elementary sulfur in the form of powder or solution is preferable because it can be efficiently dissolved in a mineral oil. When a solution of an elementary sulfur is used, it has an advantage that dissolving thereof can be carried out for a very short period of time because both the sulfur and the mineral oil are in liquid state. However, the solution is not always easy to handle because it must be used at temperatures above the melting point of the elementary sulfur and thus requires a special facility for heating, involving danger due to handling under such high temperature atmosphere. Whereas, the powdery elementary sulfur is preferably used because it is inexpensive and easy to handle and also can be dissolved in a sufficiently short period of time. There is no particular restriction on the sulfur content of the sulfurized mineral oil. However, the sulfur content is preferably from 0.05 to 1.0 percent by mass, more preferably from 0.1 to 0.5 percent by mass, on the basis of the total mass of the sulfurized mineral oil.

The thiazole compounds are preferably those represented by the formulas below:

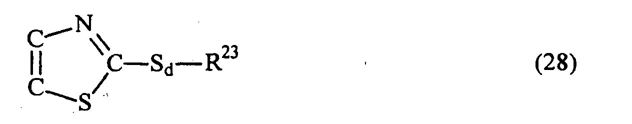

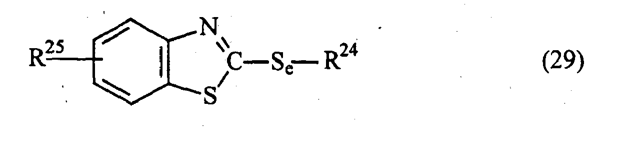

In' formulas (28) and (29), R²³ and R²⁴ are each independently hydrogen, a hydrocarbon group having 1 to 30 carbon atoms or an amino group, R²⁵ is hydrogen or an alkyl group having 1 to 4 carbon atoms, and d and e are each independently an integer of 0 to 3.

Among these compounds, preferred are benzothiazole compounds represented by formula (29). As described above, R²⁴ in formula (29) is hydrogen, a hydrocarbon group having 1 to 30 carbon atoms, or an amino group. However, R²⁴ is preferably hydrogen or a hydrocarbon group having 1 to 18 carbon atoms, more preferably hydrogen or a hydrocarbon group having 1 to 12 carbon atoms. As described above, R²⁵ in formula (29) is hydrogen or an alkyl group having 1 to 4 carbon atoms. However, R²⁵ is preferably hydrogen or an alkyl group having 1 to 3 carbon atoms, more preferably hydrogen or a hydrocarbon group having 1 or 2 carbon atoms. As described above, e in formula (29) is an integer of 0 to 3, but is preferably an integer of 0 to 2. Specific examples of such benzothiazole compounds include benzothiazole, 2-mercaptobenzothiazole, 2-(hexyldithio)benzothiazole, 2-(octyldithio)benzothiazole, 2-(decyldithio)benzothiazole, 2-(dodecyldithio)benzothiazole, and 2-(N,N-diethyldithiocarbamyl)benzothiazole.

The thiadiazole compounds are preferably 1,3,4-thiadiazole compounds represented by formula (30), 1,2,4-thiadiazole compounds represented by formula (31), and 1,4,5-thiadiazole compounds represented by formula (32):

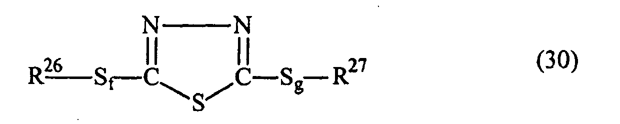

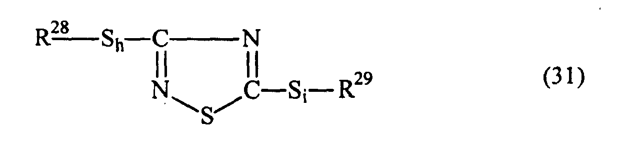

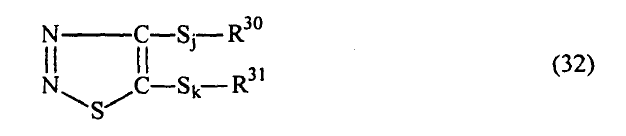

In formulas (30) to (32) above, R²⁶, R²⁷ R²⁸, R²⁹, R³⁰ and R³¹ may be the same or different and are each independently hydrogen or a hydrocarbon group having 1 to 20 carbon atoms, and f, g, h, i, j and k may be the same or different and are each independently an integer of 0 to 3.

As described above, R²⁶, R²⁷, R²⁸, R²⁹, R³⁰ and R³¹ in formulas (30) to (32) are each independently hydrogen or a hydrocarbon group having 1 to 20 carbon atoms. However, R²⁶, R²⁷, R²⁸, R²⁹, R³⁰ and R³¹ are each independently preferably hydrogen or a hydrocarbon group having 1 to 18 carbon atoms, more preferably hydrogen or a hydrocarbon group having 1 to 12 carbon atoms. As described above, f, g, h, i, j and k in formulas (30) to (32) are each independently an integer of 0 to 3 but are each independently preferably an integer of 0 to 2.

Specific examples of such thiadiazole compounds include 2,5-bis(n-hexyldithio)-1,3,4-thiadiazole, 2,5-bis(n-octyldithio)-1,3,4-thiadiazole, 2,5-bis(n-nonyldithio)-1,3,4-thiadiazole, 2,5-bis(1,1,3,3-tetramethylbutyldithio)-1,3,4-thiadiazole, 3,5-bis(n-hexyldithio)-1,2,4-thiadiazole, 3,5-bis(n-octyldithio)-1,2,4-thiadiazole, 3,5-bis(n-nonyldithio)-1,2,4-thidiazole, 3,5-bis(1,1,3,3-tetramethylbutyldithio)-1,2,4-thiadiazole, 4,5-bis(n-hexyldithio)-1,2,3-thiadiazole, 4,5-bis(n-octyldithio)-1,2,3-thidiazole, 4,5-bis(n-nonyldithio)-1,2,3-thiadiazole, and 4,5-bis(1,1,3 3-tetramethylbutyldithio)-1,2,3-thiadiazole.

The sulfur-containing extreme pressure additives used in the present invention are preferably dihydrocarbyl polysulfides and sulfurized esters in view of anti-wear properties. When these sulfur-containing extreme pressure additives are contained in the grease composition for a one-way clutch of the present invention, there is no particular restriction on the amount of the additives therein. However, the amount is preferably from 0.05 to 10 percent by mass, more preferably from 0.1 to 7 percent by mass, and more preferably from 0.2 to 5 percent by mass, on the basis of the total mass of the composition.

Examples of the phosphorus-containing extreme pressure additive include phosphoric acid esters, acid phosphoric acid esters, phosphorus acid esters, and phosphorothionates.

Among these phosphorus-containing extreme pressure additives, phosphoric acid esters, acid phosphoric acid esters, and phosphorous acid esters are esters of phosphoric acid or phosphorus acid and alkanol and polyether type alcohol, or derivatives of the esters.

Examples of the phosphorus acid ester include tributyl phosphate, tripentyl phosphate, trihexyl phosphate, triheptyl phosphate, trioctyl phosphate, trinonyl phosphate, tridecyl phosphate, triundecyl phosphate, tridodecyl phosphate, tritridecyl phosphate, tritetradecyl phosphate, tripentadecyl phosphate, trihexadecyl phosphate, triheptadecyl phosphate, trioctadecyl phosphate, trioleyl phosphate, triphenyl phosphate, tricresyl phosphate, trixylenyl phosphate, cresyldiphenyl phosphate, and xylenyldiphenyl phosphate.

Examples of the acid phosphoric acid ester include monobutyl acid phosphate, monopentyl acid phosphate, monohexyl acid phosphate, monoheptyl acid phosphate, monooctyl acid phosphate, monononyl acid phosphate, monodecyl acid phosphate, monoundecyl acid phosphate, monododecyl acid phosphate, monotridecyl acid phosphate, monotetradecyl acid phosphate, monopentadecyl acid phosphate, monohexadecyl acid phosphate, monoheptadecyl acid phosphate, monooctadecyl acid phosphate, monooleyl acid phosphate, dibutyl acid phosphate, dipentyl acid phosphate, dihexyl acid phosphate, diheptyl acid phosphate, dioctyl acid phosphate, dinonyl acid phosphate, didecyl acid phosphate, diundecyl acid phosphate, didodecyl acid phosphate, ditridecyl acid phosphate, ditetradecyl acid phosphate, dipentadecyl acid ' phosphate, dihexadecyl acid phosphate, diheptadecyl acid phosphate, dioctadecyl acid phosphate, and dioleyl acid phosphate.

Examples of the.phosphorus acid esters include dibutyl phosphite, dipentyl phosphite, dihexyl phosphite, dihetpyl phosphite, dioctyl phosphite, dinonyl phosphite, didecyl phosphite, diundecyl phosphite, didodecyl phosphite, dioleyl phosphite, diphenyl phosphite, dicresyl phosphite, tributyl phosphite, tripentyl phosphite, trihexyl phosphite, triheptyl phosphite, trioctyl phosphite, trinonyl phosphite, tridecyl phosphite, triundecyl phosphite, tridecyl phosphite, trioleyl phosphite, triphenyl phosphite, and tricresyl phosphite.

Mixtures of these esters may be used.

The phosphorothionates are compounds represented by the formula below: 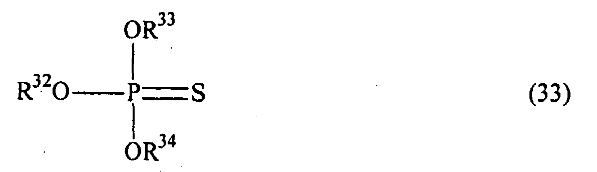 wherein R³², R³³, and R³⁴ may be the same or different and are each independently a hydrocarbon group having 1 to 24 carbon atoms.

Specific examples of the hydrocarbon group having 1 to 24 carbon atoms for R³², R³³, and R³⁴ include alkyl, cycloalkyl, alkenyl, alkylcycloalkyl, aryl, alkylaryl, and arylalkyl groups..

Examples of the alkyl group include those which may be straight-chain or branched, such as methyl, ethyl, propyl, butyl, pentyl, hexyl, heptyl, octyl, nonyl, decyl, undecyl, dodecyl, tridecyl, tetradecyl, pentadecyl, hexadecyl, heptadecyl, and octadecyl groups.

Examples of the cycloalkyl group include those having 5 to 7 carbon atoms, such as cyclopentyl, cyclohexyl, and cycloheptyl groups.

Examples of the alkylcycloalkyl groups include those having 6 to 11 carbon atoms, such as methylcyclopentyl, dimethylcyclopentyl, methylethylcyclopentyl, diethylcyclopentyl, methylcyclohexyl, dimethylcyclohexyl, methylethylcyclohexyl, diethylcyclohexyl, methylcycloheptyl, dimethylcycloheptyl, methylethylcycloheptyl and diethylcycloheptyl groups, of which the alkyl groups may bond to any position of the cycloalkyl groups.

Examples of the alkenyl group include butenyl, pentenyl, hexenyl, heptenyl, octenyl, noneyl, decenyl, undecenyl, dodecenyl, tridecenyl, tetradecenyl, pentadecenyl, hexadecenyl, heptadecenyl and octadecenyl groups, all of which may be straight-chain or branched and the position of which the double bonds may vary.

Examples of the aryl group include phenyl and naphtyl groups. Examples of the alkylaryl group include those having 7 to 18 carbon atoms, such as tolyl, xylyl, ethylphenyl, propylphenyl, butylphenyl, pentylphenyl, hexylphenyl, heptylphenyl, octylphenyl, nonylphenyl, decylphenyl, undecylphenyl, and dodecylphenyl groups, of which the alkyl groups may be straight-chain or branched and may bond to any position of the aryl groups.

Examples of the arylalkyl group include those having 7 to 12 carbon atoms, such as benzyl, phenylethyl, phenylpropyl, phenylbutyl, phenylpentyl, and phenylhexyl groups, of which the alkyl groups may be straight-chain or branched.

The hydrocarbon group having 1 to 24 carbon atoms for R³², R³³, and R³⁴ is preferably an alkyl group, an aryl group, or an alkylaryl group, more preferably an alkyl group having 4 to 18 carbon atoms, an alkylaryl group having 7 to 24 carbon atoms, or a phenyl group.

Specific examples of the phosphorothionates represented by formula (33) include tributyl phosphorothionate, tripentyl phosphorothionate, trihexyl phosphorothionate, triheptyl phosphorothionate, trioctyl phosphorothionate, trinonyl phosphorothionate, tridecyl phosphorothionate, triundecyl phosphorothionate, tridodecyl phosphorothionate, tritridecyl phosphorothionate, tritetradecyl phosphorothionate, tripentadecyl phosphorothionate, trihexadecyl phosphorothionate, triheptadecyl phosphorothionate, trioctadecyl phosphorothionate, trioleyl phosphorothionate, triphenyl phosphorothionate, tricresyl phosphorothionate, trixylenyl phosphorothionate, cresyldiphenyl phosphorothionate, xylenyldiphenyl phosphorothionate, tris(n-propylphenyl) phosphorothionate, tris(isopropylphenyl) phosphorothionate, tris(n-butylphenyl) phosphorothionate, tris(isobutylphenyl) phosphorothionate, tris(s-butylphenyl) phosphorothionate, and tris(t-butylphenyl) phosphorothionate. Mixtures of these phosphorothionates may be used.

When these phosphorus-containing extreme pressure additives are contained in the grease composition for a one-way clutch of the present invention, there is no particular restriction on the amount of the additives. However, the amount is preferably from 0.01 to 10 percent by mass, more preferably from 0.05 to 7 percent by mass, more preferably from 0.1 to 5 percent by mass, on the basis of the total mass of the composition.

Examples of the organic zinc compounds include zinc dithiophosphate compounds represented by formula (34), zinc dithiocarbamate compounds represented by formula (35), and zinc salts of phosphorus compounds represented by formula (36) or (37): 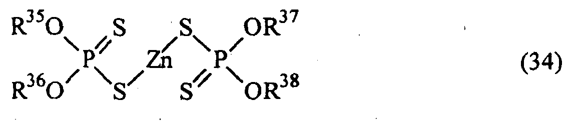 wherein R³⁵, R³⁶, R³⁷, and R³⁸ may be the same or different and are each independently a hydrocarbon group having one or more carbon atom; 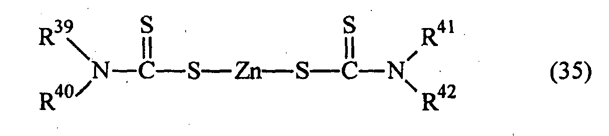 wherein R³⁹, R⁴⁰, R⁴¹, and R⁴² may be the same or different and are each independently a hydrocarbon group having one or more carbon atom; 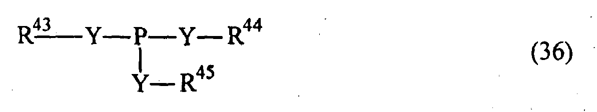 wherein Y moieties are each independently oxygen or sulfur, at least two of the three Y moieties are oxygen, and R⁴³, R⁴⁴, and R⁹⁵ may be the same or different and are each independently hydrogen or a hydrocarbon group having 1 to 30 carbon atoms; and 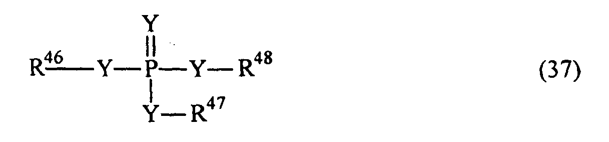 wherein Y moieties are each independently oxygen or sulfur, at least three of the four Y moieties are oxygen, and R⁴⁶, R⁴⁷, and R⁴⁸ may be the same or different and are each independently hydrogen or a hydrocarbon group having 1 to 30 carbon atoms.

Examples of the hydrocarbon group for R³⁵ to R⁴² in formulas (34) and (35) include alkyl groups having 1 to 24 carbon atoms, cycloalkyl groups having 5 to 7 carbon atoms, alkylcycloalkyl groups having 6 to 11 carbon atoms, aryl groups having 6 to 18 carbon atoms, alkylaryl groups having 7 to 24 carbon atoms, and arylalkyl groups having 7 to 12 carbon atoms.

Specific examples of the alkyl groups include methyl, ethyl propyl (inclusive of all branched isomers), butyl (inclusive of all branched isomers), pentyl (inclusive of all branched isomers), hexyl (inclusive of all branched isomers), heptyl (inclusive of all branched isomers), octyl (inclusive of all branched isomers), nonyl (inclusive of all branched isomers), decyl (inclusive of all branched isomers), undecyl (inclusive of all branched isomers), dodecyl (inclusive of all branched isomers), tridecyl (inclusive of all branched isomers), tetradecyl (inclusive of all branched isomers), pentadecyl (inclusive of all branched isomers), hexadecyl (inclusive of all branched isomers), heptadecyl (inclusive of all branched isomers), octadecyl (inclusive of all branched isomers), nonadecyl (inclusive of all branched isomers), eicosyl (inclusive of all branched isomers), heneicosyl (inclusive of all branched isomers), docosyl (inclusive of all branched isomers), tricosyl (inclusive of all branched isomers), and tetracosyl groups (inclusive of all branched isomers).

Specific examples of the cycloalkyl groups include cyclopentyl, cyclohexyl, and cycloheptyl groups.

Specific examples of the alkylcycloalkyl groups include methylcyclopentyl (inclusive of all positional isomers), ethylcyclopentyl (inclusive of all positional isomers), dimethylcyclopentyl (inclusive of all positional isomers), propylcyclopentyl (inclusive of all branched isomers and all positional isomers), methylethylcyclopentyl (inclusive of all positional isomers), trimethylcyclopentyl (inclusive of all positional isomers), butylcyclopentyl (inclusive of all branched isomers and all positional isomers), methylpropylcyclopentyl (inclusive of all branched isomers and all positional isomers), diethylcyclopentyl (inclusive of all positional isomers), dimethylethylcyclopentyl (inclusive of all positional isomers), methylcyclohexyl (inclusive of all positional isomers), ethylcyclohexyl (inclusive of all positional isomers), dimethylcyclohexyl (inclusive of all positional isomers), propylcyclohexyl (inclusive of all branched isomers and all positional isomers), methylethylcyclohexyl (inclusive of all positional isomers), trimethylcyclohexyl (inclusive of all positional isomers), butylcyclohexyl (inclusive of all branched isomers and all positional isomers), methylpropylcyclohexyl (inclusive of all branched isomers and all positional isomers), diethylcyclohexyl (inclusive of all positional isomers), dimethylethylcyclohexyl (inclusive of all positional isomers), methylcycloheptyl (inclusive of all positional isomers), ethylcycloheptyl (inclusive of all positional isomers), dimethylcycloheptyl (inclusive of all positional isomers), propylcycloheptyl (inclusive of all branched isomers and all positional isomers), methylethylcycloheptyl (inclusive of all positional isomers), trimethylcycloheptyl (inclusive of all positional isomers), butylcycloheptyl (inclusive of all branched isomers and all positional isomers), methylpropylcycloheptyl (inclusive of all branched isomers and all positional isomers), diethylcycloheptyl (inclusive of all positional isomers), and dimethylethylcycloheptyl (inclusive of all positional isomers) groups.

Specific examples of the aryl group include phenyl and naphthyl groups.

Specific examples of the alkylaryl group include tolyl (inclusive of all positional isomers), xylyl (inclusive of all positional isomers), ethylphenyl (inclusive of all positional isomers), propylphenyl (inclusive of all branched isomers and all positional isomers), methylethylphenyl (inclusive of all positionalisomers), trimethylphenyl (inclusive of all positional isomers), butylphenyl (inclusive of all branched isomers.and all positional isomers); methylpropylphenyl (inclusive of all branched isomers and all positional isomers), diethylphenyl (inclusive of all positional isome.rs), dimethylethylphenyl (inclusive of all positional isomers), pentylphenyl (inclusive of all branched isomers and all positional isomers), hexylphenyl (inclusive of all branched isomers and all positional isomers), heptylphenyl (inclusive of all branched isomers and all positional isomers), octylphenyl (inclusive of all branched isomers and all positional isomers), nonylphenyl (inclusive of all branched isomers and all positional isomers), decylphenyl (inclusive of all branched isomers and all positional isomers), undecylphenyl (inclusive of all branched isomers and all positional isomers), dodecylphenyl (inclusive of all branched isomers and all positional isomers), tridecylphenyl (inclusive of all branched isomers and all positional isomers), tetradecylphenyl (inclusive of all branched isomers and all positional isomers), pentadecylphenyl (inclusive of all branched isomers and all positional isomers), hexadecylphenyl (inclusive of all branched isomers and all positional isomers), heptadecylphenyl (inclusive of all branched isomers and all positional isomers), and octadecylphenyl (inclusive of all branched isomers and all positional isomers) groups.

Specific examples of the arylalkyl group include benzyl, phenetyl, phenylpropyl (inclusive of all branched isomers), and phenylbutyl (inclusive of all branched isomers) groups.

With regard to zinc salts of phosphorus compounds represented by formula (36) or (37), specific examples of the hydrocarbon group having 1 to 30 carbon atoms for R⁴³ to R⁴⁸ include alkyl, cycloalkyl, alkenyl, alkylcycloalkyl, aryl, alkylaryl, and arylalkyl groups.

Examples of the alkyl group include those which may be straight-chain or branched, such as methyl, ethyl, propyl, butyl, pentyl, hexyl, heptyl, octyl, nonyl, decyl, undecyl, dodecyl, tridecyl, tetradecyl, pentadecyl, hexadecyl, heptadecyl, and octadecyl groups.

Examples of the cycloalkyl group include those having 5 to 7 carbon atoms, such as cyclopentyl, cyclohexyl, and cycloheptyl groups. Examples of the alkylcycloalkyl groups include those having 6 to 11 carbon atoms, such as methylcyclopentyl, dimethylcyclopentyl, methylethylcyclopentyl, diethylcyclopentyl, methylcyclohexyl, dimethylcyclohexyl, methylethylcyclohexyl, diethylcyclohexyl, methylcycloheptyl, dimethylcycloheptyl, methylethylcycloheptyl and diethylcycloheptyl groups, of which the alkyl groups may bond to any position of the cycloalkyl groups.

Examples of the alkenyl group include butenyl, pentenyl, hexenyl, heptenyl, octenyl, noneyl, decenyl, undecenyl, dodecenyl, tridecenyl, tetradecenyl, pentadecenyl, hexadecenyl, heptadecenyl and octadecenyl groups, all of which may be straight-chain or branched and the position of which the double bonds may vary.

Examples of the aryl group include phenyl and naphtyl groups. Examples of the alkylaryl group include those having 7 to 18 carbon atoms, such as tolyl, xylyl; ethylphenyl, propylphenyl, butylphenyl, pentylphenyl, hexylphenyl, heptylphenyl, octylphenyl, nonylphenyl, decylphenyl, undecylphenyl, and dodecylphenyl groups, of which the alkyl groups may be straight-chain or branched and may bond to any position of the aryl groups.

Examples of the arylalkyl group include those having 7 to 12 carbon atoms, such as benzyl, phenylethyl, phenylpropyl, phenylbutyl, phenylpentyl, and phenylhexyl groups, of which the alkyl groups may be straight-chain or branched.

The hydrocarbon groups having 1 to 30 carbon atoms for R⁴³ to R⁴⁸ are preferably alkyl groups having 1 to 30 carbon atoms or aryl groups having 6 to 2 4. carbon atoms, more preferably alkyl groups having 3 to 18 carbon atoms, more preferably alkyl groups having 4 to 12 carbon atoms.

R⁴³, R⁴⁴, and R⁴⁵ may be the same or different and are each independently hydrogen or any of the above-exemplified hydrocarbon groups. Preferably any one to three, more preferably any one or two, and more preferably any two of R⁴³, R⁴⁴, and R⁴⁵ are the above-exemplified hydrocarbons.

R⁴⁶, R⁴⁷ and R⁴⁸ may be the same or different and are each independently hydrogen or any of the above-exemplified hydrocarbon groups. Preferably any one to three, more preferably any one or two, and more preferably any two of R⁴⁶, R⁴⁷ and R⁴⁸ are the above-exemplified hydrocarbons.

In formula (36) representing phosphorus compounds, at least two of the three Y moieties are necessarily oxygen, but preferably all of the Y moieties are oxygen.

In formula (37) representing phosphorus compounds, at least three of the four Y moieties are necessarily oxygen, but preferably all of the Y moieties are oxygen.

Examples of phosphorus compounds represented by formula (36) include phosphorus acid; monothiophosphorus acids; phosphorus acid monoesters and monothiophosphorus acid monoesters having any one of the above-exemplified hydrocarbon groups having 1 to 30 carbon atoms; phosphorus acid diesters and monothiophosphorus acid diesters having any two of the above-exemplified hydrocarbon groups having 1 to 30 carbon atoms; phosphorus acid triesters and monothiophosphorus acid triesters having any three of the above-exemplified hydrocarbon groups having 1 to 30 carbon atoms; and mixtures thereof. Among these, preferred are phosphorus acid monoesters and phosphorus acid diesters, and more preferred are phosphorus acid diesters.

Examples of phosphorus compounds represented by formula (37) include phosphoric acid; monothiophosphoric acids; phosphoric acid monoesters and monothiophosphoric acid monoesters having any one of the above-exemplified hydrocarbon groups having 1 to 30 carbon atoms; phosphoric acid diesters and monothiophosphoric acid diesters having any two of the above-exemplified hydrocarbon groups having 1 to 30 carbon atoms; phosphoric acid triesters and monothiophosphoric acid triesters having any three of the above-exemplified hydrocarbon groups having 1 to 30 carbon atoms; and mixtures thereof.

The zinc salts of compounds represented by formula (36) or (37) vary in structure depending on the number of OH or SH group. Therefore, there is no particular restriction on the structure of the zinc salts. For example, when 1 mole of zinc oxide is reacted with 2 moles of phosphonic acid diester (one OH group), it is assumed that a compound with a structure represented by the formula below is obtained as the main component but polymerized molecules may also exist: 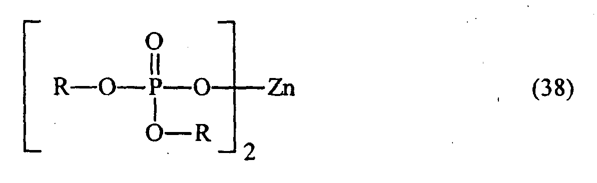 wherein R is a hydrocarbon group having 1 to 30 carbon atoms.

For another example, when 1 mole of zinc oxide is reacted with 1 mole of a phosphoric acid monoester (two OH groups), it is assumed that a compound with a structure represented by the formula below is obtained as the main component but polymerized molecules may also exist: 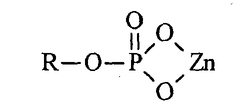 wherein R is a hydrocarbon group having 1 to 30 carbon atoms.

The organic zinc compound used in the present invention is preferably any of the above zinc dithiophosphate compounds and zinc dithiocarbamate compounds in view of anti-wear properties.

When these organic zinc compounds are contained in the grease composition for a one-way clutch of the present invention, there is no particular restriction on the amount of the compounds. However, the amount is preferably from 0.05 to 10 percent by mass, more preferably from 0.1 to 7 percent by mass, more preferably from 0.2 to 5 percent by mass.

Examples of the organic molybdenum compound include derivatives of phosphoric acids or thiophosphoric acid esters represented by formula (40) and derivatives of dithiocarbamic acid esters represented by formula (41):

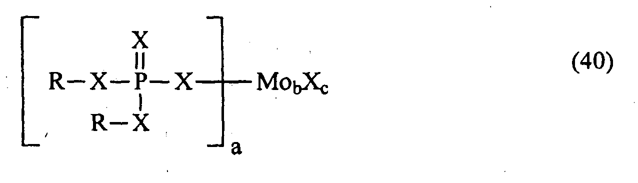

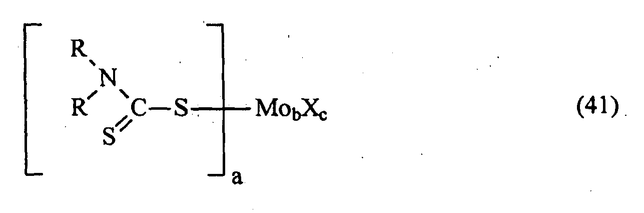

In formulas (40) and (41), R moieties may be the same or different and are each independently a hydrocarbon group having one or more carbon atoms, X moieties may be the same or different and are each independently oxygen or sulfur, and a, b, and c are each independently an integer,of 1 to 6.

Examples of the hydrocarbon group for R in formulas (40) and (41) include alkyl groups having 1 to 24 carbon atoms, cycloalkyl groups having 5 to 7 carbon atoms, alkylcycloalkyl groups having 6 to 11 carbon atoms, aryl groups having 6 to 18 carbon atoms, alkylaryl groups having 7 to 24 carbon atoms, and arylalkyl groups having 7 to 12 carbon atoms.

Specific examples of the alkyl groups include methyl, ethyl, propyl (inclusive of all branched isomers), butyl (inclusive of all branched isomers), pentyl (inclusive of all branched isomers), hexyl (inclusive of all branched isomers), heptyl (inclusive of all branched isomers), octyl (inclusive of all branched isomers), nonyl (inclusive of all branched isomers), decyl (inclusive of all branched isomers), undecyl (inclusive of all branched isomers), dodecyl (inclusive of all branched isomers), tridecyl (inclusive of all branched isomers), tetradecyl (inclusive of all branched isomers), pentadecyl (inclusive of all branched isomers), hexadecyl (inclusive of all branched isomers), heptadecyl (inclusive of all branched isomers), octadecyl (inclusive of all branched isomers), nonadecyl (inclusive of all branched isomers), eicosyl (inclusive of all branched isomers), heneicosyl (inclusive of all branched isomers), docosyl (inclusive of all branched isomers), tricosyl (inclusive of all branched isomers), and tetracosyl (inclusive of all branched isomers) groups.

Specific examples of the cycloalkyl groups include cyclopentyl, cyclohexyl, and cycloheptyl groups.

Specific examples of the alkylcycloalkyl groups include methylcyclopentyl (inclusive of all positional isomers), ethylcyclopentyl (inclusive of all positional isomers), dimethylcyclopentyl (inclusive of all positional isomers), propylcyclopentyl (inclusive of all branched isomers and all positional isomers), methylethylcyclopentyl (inclusive of all positional isomers), trimethylcyclopentyl (inclusive of all positional isomers), butylcyclopentyl (inclusive of all branched isomers and all positional isomers), methylpropylcyclopentyl (inclusive of all branched isomers and all positional isomers), diethylcyclopentyl (inclusive of all positional isomers), dimethylethylcyclopentyl (inclusive of all positional isomers), methylcyclohexyl (inclusive of all positional isomers), ethylcyclohexyl (inclusive of all positional isomers), dimethylcyclohexyl (inclusive of all positional isomers), propylcyclohexyl (inclusive of all branched isomers and all positional isomers), methylethylcyclohexyl (inclusive of all positional isomers), trimethylcyclohexyl (inclusive of all positional isomers), butylcyclohexyl (inclusive of all branched isomers and all positional isomers), methylpropylcyclohexyl (inclusive of all branched isomers and all positional isomers), diethylcyclohexyl (inclusive of all positional isomers), dimethylethylcyclohexyl (inclusive of all positional isomers), methylcycloheptyl (inclusive of all positional isomers), ethylcycloheptyl (inclusive of all positional isomers), dimethylcycloheptyl (inclusive of all positional isomers), propylcycloheptyl (inclusive of all branched isomers and all positional isomers), methylethylcycloheptyl (inclusive of all positional isomers), trimethylcycloheptyl (inclusive of all positional isomers), butylcycloheptyl (inclusive of all branched isomers and all positional isomers), methylpropylcycloheptyl (inclusive of all branched isomers and all positional isomers), diethylcycloheptyl (inclusive of all positional isomers), and dimethylethylcycloheptyl (inclusive of all positional isomers) groups.

Specific examples of the aryl groups include phenyl and naphthyl groups.

Specific examples of the alkylaryl group include tolyl (inclusive of all positional isomers), xylyl (inclusive of all positional isomers), ethylphenyl (inclusive of all positional isomers), propylphenyl (inclusive of all branched isomers and all positional isomers), methylethylphenyl (inclusive of all positional isomers), trimethylphenyl (inclusive of all positional isomers), butylphenyl (inclusive of all branched isomers and all positional isomers), methylpropylphenyl (inclusive of all branched isomers and all positional isomers), diethylphenyl (inclusive of all positional isomers), dimethylethylphenyl (inclusive of all positional isomers), pentylphenyl (inclusive of all branched isomers and all positional isomers), hexylphenyl (inclusive of all branched isomers and all positional isomers), heptylphenyl (inclusive of all branched isomers and all positional isomers), octylphenyl (inclusive of all branched isomers and all positional isomers), nonylphenyl (inclusive of all branched isomers and all positional isomers), decylphenyl (inclusive of all branched isomers and all positional isomers), undecylphenyl. (inclusive of all branched isomers and all positional isomers), dodecylphenyl (inclusive of all branched isomers and all positional isomers), tridecylphenyl (inclusive of all branched isomers and all positional isomers), tetradecylphenyl (inclusive of all branched isomers and all positional isomers), pentadecylphenyl (inclusive of all branched isomers and all positional isomers), hexadecylphenyl (inclusive of all branched isomers and all positional isomers), heptadecylphenyl (inclusive of all branched isomers and all positional isomers), and octadecylphenyl (inclusive of all branched isomers and all positional isomers) groups.

Specific examples of the arylalkyl group include benzyl, phenetyl, phenylpropyl (inclusive of all branched isomers), and phenylbutyl (inclusive of all branched isomers) groups.

Specific examples of compounds represented by formulas (40) and (41) include molybdenum phosphate, molybdenum thiophosphate, molybdenum dithiophosphate, and molybdenum dihiocarbamate.

The derivatives of phosphoric acids or thiophosphoric acid esters represented by formula (40) and derivatives of dithiocarbamic acid esters represented by formula (41) are compounds usually produced by reacting phosphoric acid esters, thiophosphoric acid esters, dithiocarbamic acid esters and inorganic molybdenum compounds (for example, molybdenum trioxide, molybdic acid or salts thereof) if necessary together with a sulfur source.

Since molybdenum may be of various valence, the compounds produced by the foregoing reaction are in the form of mixtures. Amongst, most typical compounds are those represented by formulas (42) and (43):

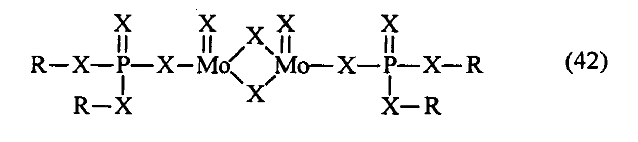

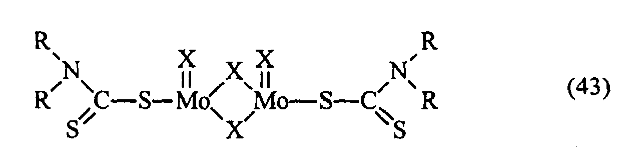

When these organic molybdenum compounds are contained in the grease composition for a one-way clutch of the present invention, there is no particular restriction on the amount of the compounds. However, the amount is preferably from 0.05 to 10 percent by mass, more preferably from 0.1 to 7 percent by mass, more preferably from 0.2 to 5 percent by mass, on the basis of the total mass of the composition.

The metallic detergents are preferably sulfonates, phenates and salicylates, containing an alkali metal such as sodium and potassium or an alkaline earth metal such as magnesium, calcium, and barium, as the positive component; and mixtures thereof.

With regard to sulfonates used in the present invention, there is no particular restriction on the process for producing the same. For example, the sulfonates are preferably alkali metal salts or alkaline earth metal salts, of alkyl aromatic sulfonic acids, obtained by sulfonating alkyl aromatic compounds having a molecular weight of 100 to 1,500, preferably 200 to 700, and mixtures thereof. The alkyl aromatic sulfonic acid used herein encompasses petroleum sulfonic acid such as those obtained by sulfonating an alkyl aromatic compound contained in the lubricant fraction of a mineral oil and mahogany acid by-produced upon production of white oil as well as synthetic sulfonic acids such as those obtained by sulfonating an alkyl benzene having a straight-chain or branched alkyl group, such as a by-product from a plant for producing an alkyl benzene used as the raw material of a detergent or an alkylated product obtained by alkylating polyolefin to benzene, and those obtained by sulfonating dinonylnaphthalene.

Specific examples of the phenate used in the present invention include alkali metal salts or alkaline earth metal salts of alkylphenols having one or two alkyl groups having 4 to 20 carbon atoms in the presence or absence' of elementary sulfur and mixtures thereof.

Specific examples of the salicylate used in the present invention include alkali metal salts or alkaline earth metal salts of alkylsalicylic acids having one or two alkyl groups having 4 to 20 carbon atoms in the presence or absence of elementary sulfur and mixtures thereof.

There is no particular restriction on the base number of the metallic detergent. However, the base number is preferably 5 mgKOH/g or higher, more preferably 10 mgKOH/g or higher, more preferably 50 mgKOH/g or higher, and particularly preferably 100 mgKOH/g or higher. There is no particular restriction on the upper limit of the base number. However, it is usually 600 mgKOH/g or lower in view of availability. The term "base number" used herein denotes a base number [mgKOH/g] measured by the perchloric acid potentiometric titration method in accordance with section 6 of JIS K2501 "Petroleum products and lubricants-Determination of neutralization number".

The metallic detergent with a total base number within the above range may be produced by reacting the above-described aromatic sulfonic acid, alkylphenol or alkylsalicylic acid with a base containing an alkali metal (an oxide or hydroxide of an alkali metal) or a base containing an alkaline earth metal (an oxide or hydroxide of an alkaline earth metal) so as to synthesize a neutral salts (normal salt), which is then further basified. Examples of such a basified salt include basic salts produced by heating a neutral salt obtained as described above, and an excess amount of a base of an alkali metal or a base of an alkaline earth metal salt in the presence of water; carbonate overbased salts (superbasic salts) produced by reacting such a neutral salt with a base of an alkali metal or a base of an alkaline earth metal in the presence of carbonic acid gas; borate overbased salts (superbasic salts) produced by reacting such a neutral salt with a base of an alkali metal or a base of an alkaline earth metal and a boric acid compound such as boric acid or boric anhydride or reacting carbonate overbased salts (superbasic salts) with a boric acid compound such as boric acid or boric anhydride; and mixtures thereof.

There is no particular restriction on the content of the metallic detergent in the grease composition of the present invention. However, the content is preferably from 0.01 to 10 percent by mass, more preferably from 0.05 to 7 percent by mass, more preferably from 0.1 to 5 percent by mass, on the basis of the total mass of the composition.

Among the above-described various additives, preferably an organic zinc compound and a metallic detergent are used in combination, and more preferably a zinc dithiophosphate compound and an overbased magnesium sulfonate are used in combination because they are excellent in anti-wear properties and engageability.

If necessary, the grease composition of the present invention may contain a solid lubricant, an anti-oxidant, an oiliness improver, a rust-inhibitor, and a viscosity index improver so as to further improve the properties of the composition as long as the properties are not diminished.

Specific examples of the solid lubricant include boron nitride, graphite fluoride, carbon black, polytetrafluoroethylene, melamine cyanurate, molybdenum disulfide, antimony sulfide, an alkali or alkaline earth metal borate.

Specific examples of the anti-oxidant include phenolic compounds such as 2-6-di-t-butyl-4-methylphenol and 2,6-di-t-butyl-p-cresol; aminic compounds such as dialkyldiphenylamines, phenyl-α-naphthylamines, and p-alkylphenyl-α-naphthylamines; sulfuric compounds; and phenothiazinic compounds.

Specific examples of the oiliness improver include amines such as laurylamine, myristylamine, palmitylamine, stearylamine, and oleylamine; higher alcohols such as lauryl alcohol, myristyl alcohol, palmityl alcohol, stearyl alcohol, and oleyl alcohol; higher fatty acids such as lauric acid, myristic acid, palmitic acid, stearic acid, and oleic acid; fatty acid esters such as methyl laurate, methyl myristate, methyl palmitate, methyl stearate, and methyl oleate; amides such as laurylamide, myristylamide, palmitylamide, stearylamide, and oleylamide; and fats and oils.

Specific examples of the rust-inhibitor include metal soaps; polyhydric alcohol partial esters such as sorbitan fatty acid ester; amines; phosphoric acid, and phosphates.

Specific examples of the viscosity index improvers include polymethacrylates, polyisobutylenes, and polystyrenes.

The grease composition for a one-way clutch of the present invention may be prepared by stir-mixing the above-described synthetic oil and thickner and if necessary other additives and then allowing the mixture to pass through a roll mill or the like. Alternatively, the grease composition may be prepared by adding and dissolving the raw material components of the thickner to and in the synthetic oil thereby obtaining a grease therein and then if necessary allowing the grease to pass through a roll mill after being stir-mixed with other additives.

### [Applicability in the Industry]

The grease composition with the above-described structural components, for a one-way clutch of the present invention is excellent in low-temperature engageability and anti-wear properties and thus can enhance the performance of a one-way clutch and prolong the working life thereof in a high level. There is no particular restriction on the one-way clutch to which the grease composition of the present invention can be applied. However, examples of such one-way clutches include those of alternators, starter motors, compressors of air conditioners, pulleys of water pumps, and engine starters of automobiles.

### [Best Mode for Carrying out the Invention]

Hereinafter, the present invention will be described in more details by way of the following examples and comparative examples, which should not be construed as limiting the scope of the invention.

### [Examples 1 to 11, Comparative Examples 1 to 3]

In Examples 1 to 11 and Comparative Examples 1 to 3, the base oils set forth in Table 1 were used, in which diphenylmethane-4,4'-diisocyanate was dissolved by heating. To the base oils were added various amines and alcohols set forth in Table 1, that had been heat-melted. Thereafter, various additives set forth in Table 1 were added to the resulting gel-like substances. The mixtures were allowed to pass through a roll mill after stirring thereby obtaining grease compositions.

In Table 1, the dihydrocarbyl polysulfide and anti-oxidant denote a sulfurized polyisobutylene (sulfur content ratio: 45 percent by mass) and an aminic anti-oxidant (phenyl-α-naphtylamine), respectively.

### (1) Four-Ball Extreme Pressure Test

In accordance with ASTM D2596, the test was carried out at a predetermined load and at 1800 rpm for 10 seconds to measure the last load at which seizure does not occur (Last Non-Seizure Load: LSNL). The results are also set forth in Table 1.

### (2) SRV Friction Test

The test was carried out by pressing a 10 mm diameter ball (upper specimen) against a cylindrical plate (lower specimen), under the load of 100 N and at the specimen temperature of 100°C and rubbing the upper specimen against the lower specimen with an oscillating motion at a frequency of 30 Hz and stroke of 2 mm for 30 minutes. The area of the worn surface on the ball after the test was determined. The results are set forth in Table 1.

### (3) Engageability

A commercially available one-way clutch was used. The driving shaft component was engaged with the driven shaft component at -30°C, and then rotated so as to evaluate how well the driven shaft component followed up the rotation of the driving shaft component. The results are set forth in Table 1.

### (4) Amount of Evaporation

Into a 100 ml beaker were put 50 g of each of the base oils. The beaker was then put into a thermostat, kept at 120°C and taken out after 10 hours. The base oil was weighed so as to measure the amount of evaporation of the base oil. The results are set forth in Table 1.

**Table 1**

| | | Examples | | | | | | | | | | | Comparative Examples | | |
|---|---|---|---|---|---|---|---|---|---|---|---|---|---|---|---|
| | | 1 | 2 | 3 | 4 | 5 | 6 | 7 | 8 | 9 | 10 | 11 | 1 | 2 | 3 |
| Base Oil [mass %] | diester ¹⁾ | 89 | | | | | | | | | | | | | |
| | trimethylolpropane ester²⁾ | | 89 | | | | | | | | | | | | |
| | pentaerythritol ester ³⁾ | | | 90 | | | | | | | | | | | |
| | pentaerythritol ester⁴⁾ | | | | 82 | | | | | | | | | | |
| | alicyclic ester⁵⁾ | | | | | 82 | | | | | | | | | |
| | poly-α-olefins⁶) | | | | | | 82 | | | | | | | | |
| | poly- α-olefin⁷⁾ | | | | | | | | | | | | 82 | | |
| | polyalkylene glycol⁸⁾ | | | | | | | 82 | 81 | 80 | 80 | 80 | | | |
| | dialkyldiphenyl ether⁹⁾ | | | | | | | | | | | | | 82 | |
| | mineral oil¹⁰⁾ | | | | | | | | | | | | | | 82 |
| Kinematic Viscosity of Base Oil 40°C [mm²/s] | | 14 | 18 | 31 | 33 | 13 | 5.4 | 68 | 14 | 14 | 14 | 14 | 32 | 100 | 6.6 |
| Pour Point of Base Oil [°C] | | <-60 | <-50 | <-55 | <-55 | -57.5 | -55 | -40 | -40 | -40 | -40 | -40 | -55 | -40 | -25 |
| Thickner [mass %] | | 10 | 10 | 9 | 17 | 17 | 17 | 17 | 17 | 17 | 17 | 17 | 17 | 17 | 17 |
| Thickners [molar ratio] | diphenylmethane-4,4'-diisocyanate | 5 | 5 | 5 | 1 | 1 | 1 | 1 | 1 | 1 | 1 | 1 | 1 | 1 | 1 |
| | cyclohexylamine | 7 | 7 | 8 | 2 | 2 | 2 | 2 | 2 | 2 | 2 | 2 | 2 | 2 | 2 |
| | octadecylamine | 3 | 3 | | | | | | | | | | | | |
| | octadecyl alcohol | | | 2 | | | | | | | | | | | |
| dihydrocarbyl polysulfide¹¹⁾ [mass%] | | | | | | | | | 0.5 | | | | | | |
| tricresyl phosphate¹²⁾ [mass%] | | | | | | | | | 0.5 | | | | | | |
| zinc dithiophosphate¹³⁾ [mass%] | | | | | | | | | | 1 | | | | | |
| molybdenum dithiocarbamate¹⁴⁾ [mass%] | | | | | | | | | | | 2 | | | | |
| molybdenum dithiophosphate¹⁵⁾ [mass%] | | | | | | | | | | | | 2 | | | |
| overbased magnesium sulfonate¹⁶⁾ [mass%] anti-oxidant ¹⁷⁾ [mass%] | | | | | | | | | | 1 | | | | | |
| | | 1 | 1 | 1 | 1 | 1 | 1 | 1 | 1 | 1 | 1 | 1 | 1 | 1 | 1 |
| Four-Ball Extreme Pressure Test of Base Oil LNSL [kgf] | | 235 | 235 | 235 | 235 | 235 | 196 | 196 | 196 | 196 | 196 | 196 | 392 | 490 | 392 |
| SRV Friction Test wear area [mm²] | | 0.188 | 0.186 | 0.180 | 0.178 | 0.176 | 0.210 | 0.170 | 0.120 | 0.100 | 0.125 | 0.109 | 0.175 | 0.170 | 0.173 |
| Evaluation of Engageability | | good | good | good | good | good | good | good | good | good | good | good | poor | poor | poor |
| Evaporation Amount of Base Oil [mass%] | | 0.5 | 0.2 | 0.1 | 0.1 | 14.5 | 31 | 0.5 | - | - | - | - | 0.2 | 0.1 | 14 |

| | | | | | | | | | | | | | | | |
|---|---|---|---|---|---|---|---|---|---|---|---|---|---|---|---|
| 1) dioctylsebacate 2) mixed ester of trimethylolpropane, C₇ straight-chain fatty acid, and C₈ branched fatty acid (straight-chain fatty acid : branched fatty acid=40:60) 3) mixed ester of pentaerythritol and C₇₋₁₂ saturated carboxylic acid 4) mixed ester of pentaerythritol, C₇ straight-chain fatty acid, and C₈ branched fatty acid (straight-chain fatty acid : branched fatty acid=50:50) 5) 2-ethylhexyl 1,2-cyclohexanedicarboxylate 6) mixture of monomer to pentamer of 1-decene 7) mixture of hydrogenated dimer to pentamer of 1-decene 8) polyoxypropylene monobutyl ether 9) 2 moles of 1-tetradecene added to one mole of diphenyl ether 10) solvent-refined paraffinic mineral oil 11) sulfurized polyisobutylene (sulfur content ratio: 45 mass %) 12) phosphorus content ratio: 8 mass % 13) molybdenum dihexyldithiophosphate (molybdenum content ratio: 8 mass %) 14) molybdenum dioctyldithiocarbamate (molybdenum content ratio: 28 mass %) 15) zinc sec-alkyldithiophosphate (zinc content ratio: 8 mass %) 16) petroleum sulfonate (base number: 300mgKOH/g, magnesium content ratio: 10 mass %) 17) phenyl-α-naphthylamine | | | | | | | | | | | | | | | |

## Claims

1. A grease composition for a one-way clutch comprises a synthetic oil with a last non-seizure load of 314 N or less, as determined by Four-Ball Extreme Pressure Test according to ASTM D2596 and a pour point of -35°C or lower and a thickner.

2. The grease composition for a one-way clutch according to claim 1, wherein the synthetic oil is an ester or a polyoxyalkylene glycol.
